# EUROPEAN PATENT SPECIFICATION

(11) **EP 4 548 541 B1**
(45) Date of publication and mention of the grant of the patent: **09.12.2026**
(21) Application number: 23736024.3
(22) Date of filing: 26.06.2023
(51) Int. Cl.: G06F 8/65, H04L 9/40, H04L 41/082, H04L 67/025, H04L 67/12, H04L 67/00, H04W 12/30, H04L 67/53, H04W 12/08, H04L 41/0853

(54) **METHOD AND DEVICES FOR COMMUNICATING BETWEEN AN INTERNET OF THINGS DEVICE AND A REMOTE COMPUTER SYSTEM**
VERFAHREN UND VORRICHTUNGEN ZUR KOMMUNIKATION ZWISCHEN EINER INTERNET-DER-DINGE-VORRICHTUNG UND EINEM ENTFERNTEN COMPUTERSYSTEM
PROCÉDÉ ET DISPOSITIFS DE COMMUNICATION ENTRE UN DISPOSITIF DE L'INTERNET DES OBJETS ET UN SYSTÈME INFORMATIQUE DISTANT

(30) Priority: 01.07.2022 CH 7952022
(43) Date of publication of application: 07.05.2025
(73) Proprietor: Legic Identsystems AG, 8620 Wetzikon (CH)
(72) Inventor: GUERRERO, Sebastian, 8600 Dübendorf (CH); PLÜSS, Peter, 8632 Tann (CH)
(74) Representative: Rentsch Partner AG
(86) International application number: PCT/EP2023/067279
(87) International publication number: WO 2024/002952

(56) References cited:
- EP-A1- 3 637 736
- US-A1- 2016 294 614
- US-A1- 2019 094 827
- GEHRMANN CHRISTIAN ET AL: "A Digital Twin Based Industrial Automation and Control System Security Architecture", IEEE TRANSACTIONS ON INDUSTRIAL INFORMATICS, IEEE SERVICE CENTER, NEW YORK, NY, US, vol. 16, no. 1, 2 September 2019 (2019-09-02), pages 669 - 680, XP011766593, ISSN: 1551-3203, [retrieved on 20200107], DOI: 10.1109/TII.2019.2938885

## Description

### FIELD OF THE DISCLOSURE

The present disclosure relates to a method and devices for communicating between an Internet of Things device and a remote computer system. Specifically, the present invention relates to a method, a computer system, and an Internet of Things device for communicating between the Internet of Things device and the computer system arranged remotely from the Internet of Things device.

### BACKGROUND OF THE DISCLOSURE

The so called Internet of Things or "loT" is a network of physical devices, machines, vehicles, home appliances, and other items embedded with electronics, software, sensors, actuators, and electronic communication circuits, which enable these things or devices to connect and exchange data. The loT extends the Internet beyond traditional (standard) computing devices, such as desktops, laptops, smartphones, tablets and smart watches, to any range of traditionally non-computational and/or non-Internet-enabled physical devices and objects. The loT is proliferating to the home, the office, and the streets and beyond. In general, loT devices are configured to connect wirelessly to a network and transmit data. Typically, an loT device comprises an electronic communication circuit for close range communication, such as RFID (Radio Frequency Identification), Bluetooth, Bluetooth Low Energy (BLE), and the like, which enable data communication up to a few meters, e.g. up to one to five meters, up to ten meters, or even up to hundred meters. However, a large number of loT devices, if not the majority or typical loT device, is not configured for wireless communication over an extended range directly and independently through a mobile radio network (cellular network), such as GSM (Global System for Mobile Communication) or UMTS (Universal Mobile Telephone System). Unless these loT devices, which are limited to close range wireless communication, are installed or arranged within connectivity proximity of an access point to the Internet, it is very difficult and/or inefficient to provide these loT devices with data updates, for example update of firmware, access rights, etc.

A digital twin is a digital representation of a real-world electronic device. The digital twin is configured such that it digitally mirrors at least some aspects of the real-world device. Digital twins are used, for example, to maintain an inventory of deployed or installed devices, or to model and predict device behaviour (in particular for maintenance or reliability assessments).

EP3637736A1 discloses a method and device for communicating between an IoT device and a remote computer system, in particular in which a download data message is transmitted to a mobile communication device from a remote computer system, the mobile communication device then forwarding the download data message to the loT device. According to the disclosure, the download data message is forwarded to the loT device in its entirety, which may be disadvantageous in situations where the loT device requires only a subset of data included in the download data message. For example, in the case of the download data message including a complete current set of access rights associated with the loT device, as recorded in the remote computer system, the loT device may require a change only of those access rights which have been updated with respect to an earlier set of access rights.

US 2016/294614 A1 discloses a Remote Embedded Device Update Platform which transforms telemetry inputs via REDUP components into remote embedded updates outputs. The REDUP may include a memory and processor with instructions to: obtain a remote embedded device connection request message from a remote embedded device and analyze the message to determine a version of embedded instructions on the remote embedded device. With that, the REDUP may determine if other remote embedded devices similar to the remote embedded device have provided request messages by searching a remote embedded device connection request message database. This allows the REDUP to determine if a potential issue requiring updates on the remote embedded device exists. With that, the REDUP may determine and provide an update for the remote embedded device.

### SUMMARY OF THE DISCLOSURE

It is an object of this disclosure to provide a method, a remote computer system, and an IoT device, which overcomes one or more disadvantages of the prior art.

In particular, it is an object of this disclosure to provide a method of communicating between an loT device and a remote computer system, a remote computer system configured for communication with an IoT device, and an loT device, which provides a more efficient transfer of data between the remote computer system and the loT device.

According to the present disclosure, the above-mentioned objects are achieved by a method of communicating between an IoT device and a remote computer system, the method comprising storing in the remote computer system a digital twin of the loT device. The digital twin is either linked to a unique identifier of an IoT device, or itself identifies the loT device uniquely, for example by comprising a unique identifier itself. The digital twin comprises a current set of access rights for the loT device and configuration data including an address of a mobile communication device as a communication relay address. The method comprises generating in the remote computer system, for the loT device, an update data package. The update data package is divided into a plurality of update package parts, each update package part including a subset of the current set of access rights and update metadata for the update package part. The method comprises transmitting via a mobile radio communication network the update data package for the loT device, from the remote computer system to the mobile communication device, using the communication relay address linked to the unique identifier of the loT device. The method comprises receiving, in the loT device, the update metadata for each of the update package parts. The update metadata is received from the mobile communication device via close range communication. The method comprises identifying, in the loT device, one or more required update package parts, using the update metadata received from the mobile communication device and stored metadata relating to one or more sets of access rights stored in a memory of the loT device. The method comprises transmitting, from the loT device to the mobile communication device, via the close range communication, a request message indicating the one or more required update package parts. The method comprises receiving, in the loT device from the mobile communication device, via the close range communication, the one or more required package parts of the update data package as indicated in the request message.

In an embodiment, the current set of access rights authorize access, for the loT device, to one or more access control terminals. A particular access right of the current set of access rights relates to a particular access control terminal and comprises an access control terminal identifier, an access control terminal cryptographic key, and/or an access time scheme. Access is authorized according to a method. The method comprises receiving, in the loT device, from the particular access control terminal via short range communication, the access control terminal identifier. The method comprises verifying, in the loT device, access authorization using the particular access right and the received access control terminal identifier. The method comprises generating, in the loT device, using the particular access right, an access authorization message. The method comprises transmitting, from the loT device, to the access control terminal via short range communication, the access authorization message.

In an embodiment, the current set of access rights authorize access, for the loT device to one or more access control terminals. A particular access right of the current set of access rights relates to a particular access control terminal and comprises an encrypted access payload. Access is authorized according to a method. The method comprises transmitting, from the loT device to the access control terminal via short range communication, the encrypted access payload. The method comprises verifying, in the access control terminal, the encrypted access payload. The method comprises authorizing, in the access control terminal, access for the loT device.

In an embodiment, the method further comprises storing, in the remote computer system the configuration data of the digital twin, the configuration data further including a memory configuration characteristic, the memory configuration characteristic including a memory allocation of a plurality of memory partitions. The method comprises generating the update data package to include, in a memory update package part of the plurality of update package parts, the memory configuration characteristic and metadata for the memory update package part. The method comprises receiving, in the loT device from the mobile communication device, via the close range communication, the particular update package part including the memory configuration characteristic.

In an embodiment, the method comprises storing, in the remote computer system, the configuration data of the digital twin including a current firmware indicator. The method comprises generating the update data package to include, in a firmware update package part of the plurality of update package parts, a current firmware according to the current firmware indicator and metadata for the firmware update package part. The method comprises receiving, in the loT device from the mobile communication device, via the close range communication, the firmware update package part including the current firmware.

In an embodiment, the method further comprises transmitting via a close range communication an upload status message for the remote computer system from the loT device to a mobile communication device. The mobile communication device is within the close range of the loT device during transmission. The upload status message is transmitted to the mobile communication device for forwarding to the remote computer system via the mobile radio communication network. The upload status message includes a unique identifier of the loT device. The method comprises receiving in the remote computer system the upload status message from the loT device, as forwarded by the mobile communication device via the mobile radio communication network. The method comprises storing in the remote computer system the unique identifier linked to the digital twin of the loT device.

In an embodiment, the method further comprises storing in the remote computer system, the configuration data of the digital twin including the address of the mobile communication device as the communication relay address.

In an embodiment, the method further comprises transmitting, from the loT device, a clock update request for the remote computer system, to the mobile communication device via close range communication. The method comprises receiving, in the remote computer system, the clock update message from the loT device, as forwarded by the mobile communication device via the mobile radio communication network. The method comprises transmitting, via the mobile radio communication network a clock update instruction including a current time-stamp for the loT device, from the remote computer system to the mobile communication device, using the communication relay address linked to the unique identifier of the loT device. The method comprises receiving, in the loT device, the clock update instruction, from the mobile communication device via close range communication. The method comprises reconfiguring a clock of the loT device according to the current time-stamp, provided that a time difference between transmitting of the clock update request and receiving the clock update instruction does not exceed a pre-defined timeout.

In addition to a method for communicating between an IoT device and a remote computer system, the present disclosure also relates to a remote computer system for communicating with an loT device, the computer system comprising a communication module configured to exchange data with a mobile communication device via a mobile radio communication network. The computer system further comprises a memory configured to store a digital twin of the loT device linked to a unique identifier of the loT device, the digital twin comprising a current set of access rights for the loT device and configuration data including an address of a mobile communication device, as a communication relay address. The computer system comprises a processor configured to generate, for the loT device, an update data package divided into a plurality of update package parts, each update package part including a subset of the current set of access rights and update metadata for the update package part. The computer system further comprises a processor configured to transmit via the mobile radio communication network the update data package for the loT device to the communication relay address linked to the unique identifier of the loT device. The update data package is transmitted for forwarding, by the mobile communication device, via close range communication, of one or more required update package parts, to the loT device. The required update package parts are indicated by a request message received by the mobile communication device from the loT device.

In an embodiment, the processor is further configured to extract, from an upload status message from the loT device, as received by the mobile communication device from the loT device via a close range communication circuit and forwarded by the mobile communication device via the mobile radio communication network to the computer system, the unique identifier of the loT device linked to the digital twin. The processor is configured to store in the memory of the remote computer system an address of the mobile communication device, as a communication relay address, as part of the configuration data of the digital twin of the loT device.

In an embodiment, the processor is further configured to receive a clock update message from the loT device, as received by the mobile communication device from the loT device via a close range communication circuit and forwarded by the mobile communication device via the mobile radio communication network to the computer system. The processor is configured to generate a clock update instruction including a current time-stamp for the loT device. The processor is configured to transmit via the mobile radio communication network the clock update instruction for the loT device to the communication relay address linked to the unique identifier of the loT device, for forwarding by the mobile communication device via the close range communication circuit to the loT device.

In an embodiment, the current set of access rights authorize access, for the loT device, to one or more access control terminals, one or more access rights of the current set of access rights relating to a particular access control terminal and comprising an access control terminal identifier, an access control terminal cryptographic key, and/or an access time scheme.

In an embodiment, the current set of access rights authorize access, for the loT device, to one or more access control terminals, one or more access rights of the current set of access rights relating to a particular access control terminal and comprising an encrypted access payload.

In an embodiment, the configuration data of the digital twin further includes a memory configuration characteristic including a memory allocation of a plurality of memory partitions, and the processor is configured to generate the update data package to include, in a memory update package part of the plurality of update package parts, the memory configuration characteristic and metadata for the memory update package part.

In an embodiment, the configuration data of the digital twin further includes a current firmware indicator, and the processor is configured to generate the update data package to include, in a firmware update package part of the plurality of update package parts, a current firmware according to the current firmware indicator and metadata for the firmware update package part.

In addition to a method for communicating between an IoT device and the remote computer system, the present disclosure also relates to an IoT device. The loT device comprises an electronic communication circuit for close range communication, a processor connected to the electronic communication circuit, and a memory. The processor is configured to receive, from a remote computer system update metadata as forwarded by a mobile communication device, the update metadata relating to each of a plurality of update package parts of an update data package received by the mobile communication device. The processor is configured to identify one or more required update package parts, using the update metadata received from the mobile communication device and stored metadata relating to one or more sets of access rights stored in the memory of the loT device. The processor is configured to transmit, from the loT device to the mobile communication device, via the close range communication, a request message indicating the one or more required update package parts. The processor is configured to receive, in the loT device from the mobile communication device, via the close range communication, the one or more required package parts of the update data package as indicated in the request message.

In an embodiment, the loT device acquires the current set of access rights using the received required package parts of the update data package, the current set of access rights authorizing access, for the loT device, to one or more access control terminals. A particular access right of the current set of access rights relates to a particular access control terminal and comprises an access control terminal identifier, an access control terminal cryptographic key, and/or an access time scheme. The processor is configured to receive, using the electronic communication circuit, from the particular access control terminal via short range communication, the access control terminal identifier. The processor is configured to verify access authorization using the particular access right and the received access control terminal identifier. The processor is configured to generate, using the particular access right, an access authorization message. The processor is configured to transmit, using the electronic communication circuit to the access control terminal via short range communication, the access authorization message.

In an embodiment, the loT device acquires the current set of access rights using the received required package parts of the update data package, the current set of access rights authorizing access, for the loT device, to one or more access control terminals. A particular access right of the current set of access rights relates to a particular access control terminal and comprises an encrypted access payload. The processor is further configured to transmit to the access control terminal, using the electronic communication circuit, the encrypted access payload.

In an embodiment, the loT device is further configured to receive, using the electronic communication circuit, from the mobile communication device, metadata for a memory update package part. The processor is configured to identify, in the processor, using a memory configuration characteristic stored in the memory and the metadata, whether the memory update package part is required. The processor is configured to receive, using the electronic communication circuit, from the mobile communication device, the memory update package part, if the memory update package part is required.

In an embodiment, the loT device is further configured to receive, using the electronic communication circuit, from the mobile communication device, metadata for a firmware update package part. The loT device is configured to identify, in the processor, using a firmware indicator stored in the memory and the metadata, whether the firmware update package part is required. The loT device is configured to receive, using the electronic communication circuit, from the mobile communication device, the firmware update package part, if the firmware update package part is required.

In an embodiment, the processor is further configured to generate an upload status message including a unique identifier of the loT device. The processor is configured to transmit, using the electronic communication circuit, the upload status message for the remote computer system from the loT device to the mobile communication device, the mobile communication device being within the close range of the loT device, for forwarding to the remote computer system via a mobile radio communication network.

In an embodiment, the processor is further configured to transmit, using the electronic communication circuit, a clock update request for the remote computer system to the mobile communication device via close range communication. The processor is configured to receive, using the electronic communication circuit, from the remote computer system via the mobile communication device, a clock update instruction including a current time-stamp for the loT device. The processor is configured to reconfigure a clock of the loT device according to the current time-stamp, provided that a time difference between transmitting of the clock update request and receiving the clock update instruction does not exceed a pre-defined timeout.

### BRIEF DESCRIPTION OF THE DRAWINGS

The present disclosure will be explained in more detail, by way of example, with reference to the drawings in which:
- Figure 1:: shows a block diagram schematically illustrating a mobile communication device which acts as a relay device between a remote computer system and an IoT device;
- Figure 2:: shows a block diagram schematically illustrating an IoT device connected to an access control terminal;
- Figure 3:: shows a block diagram schematically illustrating a remote computer system;
- Figure 4:: shows a block diagram schematically illustrating an update data package;
- Figure 5:: shows a block diagram schematically illustrating a mobile communication device;
- Figure 6:: shows a block diagram schematically illustrating an IoT device;
- Figure 7:: shows a block diagram schematically illustrating an IoT device, in particular an IoT device having a partitioned memory;
- Figure 8:: shows a timing diagram illustrating a number of steps performed by the remote computer system, the mobile communication device, and the loT device, for transmitting an update data package from the remote computer system to the loT device;
- Figure 9:: shows a timing diagram illustrating a number of steps performed by the loT device and an access control device for access control for access control;
- Figure 10:: shows a timing diagram illustrating a number of steps performed by the loT device and an access control terminal for access control;
- Figure 11:: shows a timing diagram illustrating a number of steps performed by the remote computer system, the mobile communication device, and the loT device, for transmitting a status message from the loT device to the remote computer system; and
- Figure 12:: shows a timing diagram illustrating a number of steps performed by the remote computer system, the mobile communication device, and the loT device, for updating a clock of the loT device.

### DETAILED DESCRIPTION OF EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that his disclosure will satisfy applicable legal requirements. Whenever possible, like reference numbers will be used to refer to like components or parts.

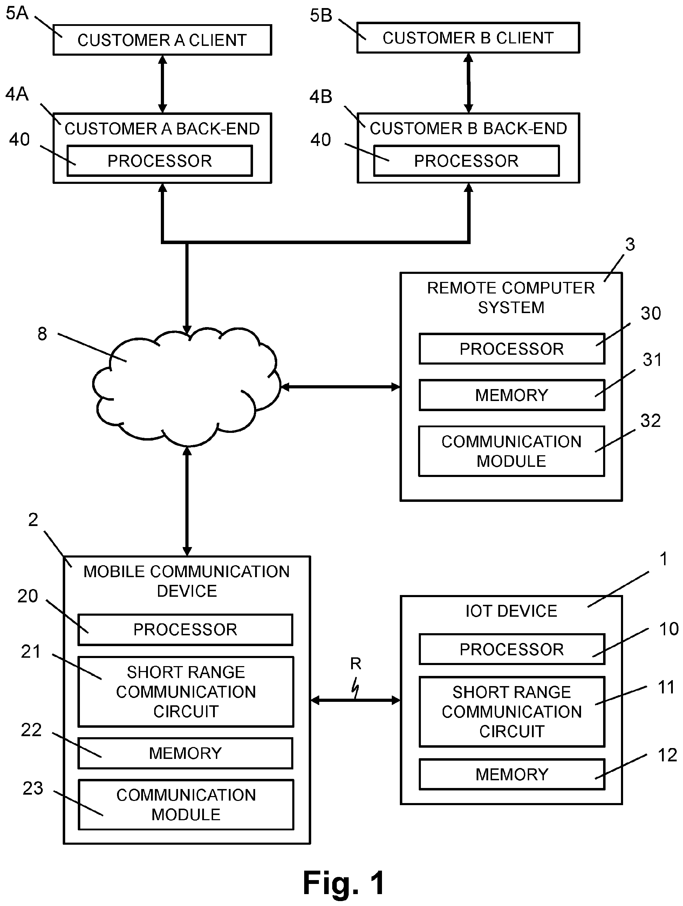

**Figure 1** shows a block diagram illustrating schematically an Internet of Things (IoT) device 1. The loT device 1 is within a short communicative range of a mobile communication device 2. The mobile communication device 2 is connected to a remote computer system 3 via a communication network 8. One or more customer back-end systems 4A, 4B are also connected to the remote computer system 3 via the communication network 8. Each customer back-end system 4A, 4B is accessible using a customer client computer 5A, 5B, respectively, which is connected to the respective back-end system 4A, 4B.

The customers A, B are persons or entities which set, update, control, or otherwise administer access rights for the loT device 1, in particular for a user in possession of the loT device 1. Each of the customers A, B administer different access rights for a single loT device 1. For example, a first customer A may administer access rights for an office building, while a second customer B may administer access rights for an apartment complex. The remote computer system 3 is connected to the customer back-end systems 4A, 4B and is configured to provide a centralized trusted service for configuring the loT device 1 with the access rights set by the customers A, B, in particular by generating and providing an update data package to the loT device 1, the update data package including the access rights as described herein.

The loT device 1 comprises a processor 10, an electronic communication circuit 11 connector to the processor 10 and a memory 12 connected to the processor 10.

The processor 10 comprises one or more electronic chips, for example one or more integrated circuits, microcontrollers, microprocessors, application specific circuits (ASICs), or the like.

The memory 12 comprises volatile (non-persistent) and/or non-volatile (persistent) memory modules. For example, the memory 12 is implemented using solid state memory (e.g. flash memory). The memory 12 is configured to store firmware, an operating system, and/or additional data relating to the firmware and/or operating system, such as application data, software libraries, log data, etc. Additionally, the memory 12 is configured to store access rights.

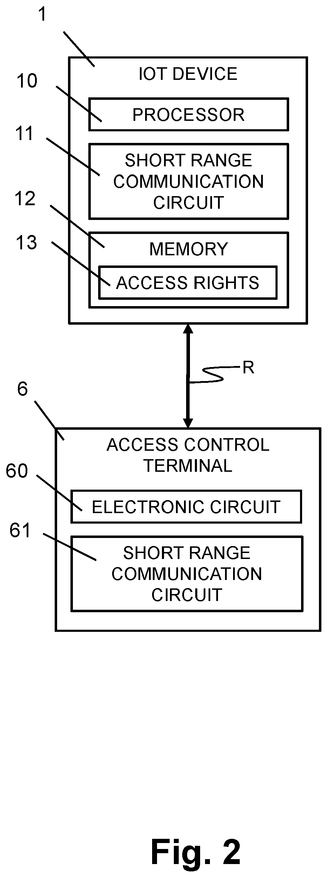

Each access right is configured to provide access at an access control terminal 6 (described in more detail with reference to Figure 2) and includes, for example, an access control terminal identifier, an access control terminal cryptographic key, and/or an access time scheme. Additionally or alternatively, an access right includes an encrypted access payload.

The processor 10 is configured to execute out one or more steps and/or functions as described herein. For example, the processor 10 is configured to execute one or more steps and/or functions as stored in the memory 12. The steps and/or functions are stored, for example, in the memory 12 as program code (e.g., as part of the firmware, the operating system, and/or the software libraries). Other steps and/or functions may be carried out by specifically arranged circuitry in the processor 10.

Depending on the embodiment, the processor 10 and the memory 12 are integrated into a single electronic chip, for example in the form of a System on a Chip (SoC).

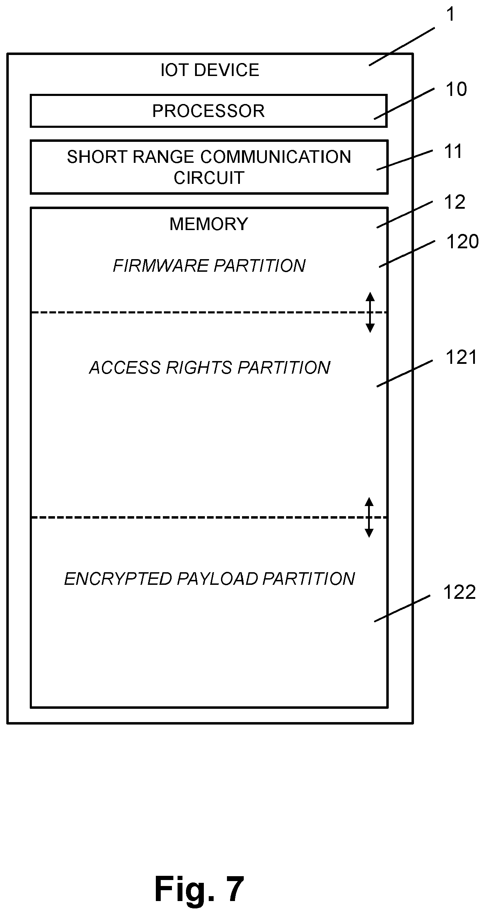

In an embodiment, the memory 12 is configured in a particular manner. Specifically, the memory 12 is partitioned into a plurality of memory partitions, as is described in more detail with reference to Figure 7.

In an embodiment, the loT device 1 comprises a secure element. The secure element is a hardware module that is either integrated into, or separate and connected to, the processor 10. For example, the secure element is implemented using a universal integrated circuit card (UICC) and/or using an embedded secure element (eSE). The secure element is configured, for example, to securely store one or more cryptographic keys.

The loT device 1 is a mobile, portable device, implemented as a self-contained unit arranged in a housing, e.g. a dongle, a key fob, a tag, or the like, or a device arranged in another mobile or stationary physical device, e.g. a machine, a vehicle, a home appliance, and other items embedded with electronics, software, sensors, and/or actuators. The loT device 1 is powered by a battery included in the loT device 1, by a power supply of the physical device having integrated the loT device 1 therein, or by the mobile communication device 2 through induction.

The electronic communication circuit 11 is configured for close range communication R with a stationary or mobile communication device 2, within the close range of the loT device 1. The electronic communication circuit 11 comprises an RFID (Radio Frequency Identification), NFC (Near Field Communication), Bluetooth, or BLE (Bluetooth Low Energy) circuit, UWB (ultra wide-band) or another circuit for wireless data communication over a close range, such as up to a few meters, e.g. up to one to five meters, up to ten meters, or even up to hundred meters.

As the loT device 1 is portable and typically does not have any means for long range wireless communication, the loT device 1 is not permanently connected to the communication network 8. Therefore, the remote computer system 3 relies on the mobile communication device 2 to act as a relay device for relaying data between the remote computer system 3 and the loT device 1. The mobile communication device 2, for example a mobile phone, must be brought into close range with the loT device 1 such that communication takes place between the loT device 1 and the mobile communication device 2.

For at least some types of data exchange between the remote computer system 3 and the loT device 1, it is not necessary that the mobile communication device 2 is simultaneously connected to both the remote computer system 3 and the loT device 1. In particular, the mobile communication device 2 can, during a first time period, be connected to the remote computer system 3 but not the loT device 1, during which time period data is transmitted from the remote computer system 3 and buffered (i.e. temporarily stored) on the mobile communication device 2. During a second time period, during which the mobile communication device 2 is connected to the loT device 1 but not the remote computer system 3, at least some of the buffered data is transmitted from the mobile communication device 2 to the loT device 1. The same can apply in reverse, i.e. for data transmitted from the loT device 1 to the remote computer system 3 via the mobile communication device 2.

The mobile communication device 2 is implemented as a mobile radio telephone (cellular phone), a laptop computer, a tablet computer, a smart watch, or another mobile electronic device configured for wireless communication via close range communication R and via a communication network 8, specifically via a mobile radio network. For that purpose, the mobile communication device 2 comprises an electronic communication circuit 21 for close range communication, compatible to the electronic communication circuit 11 of the loT device 1, and a communication module 23 for communicating via a wireless communication network 8, as illustrated in Figure 1. The communication network 8 comprises a mobile radio network such as a GSM (Global System for Mobile Communication) network, a UMTS (Universal Mobile Telephone System) network, and/or another cellular radio communication network. As illustrated in Figure 1, the mobile communication device 2 further comprises a processor 20 and a memory 22 having stored therein program code configured to control the processor 20. The communication network 8 further comprises the Internet and LAN (local Area Network) and WLAN (Wireless LAN) for accessing the Internet.

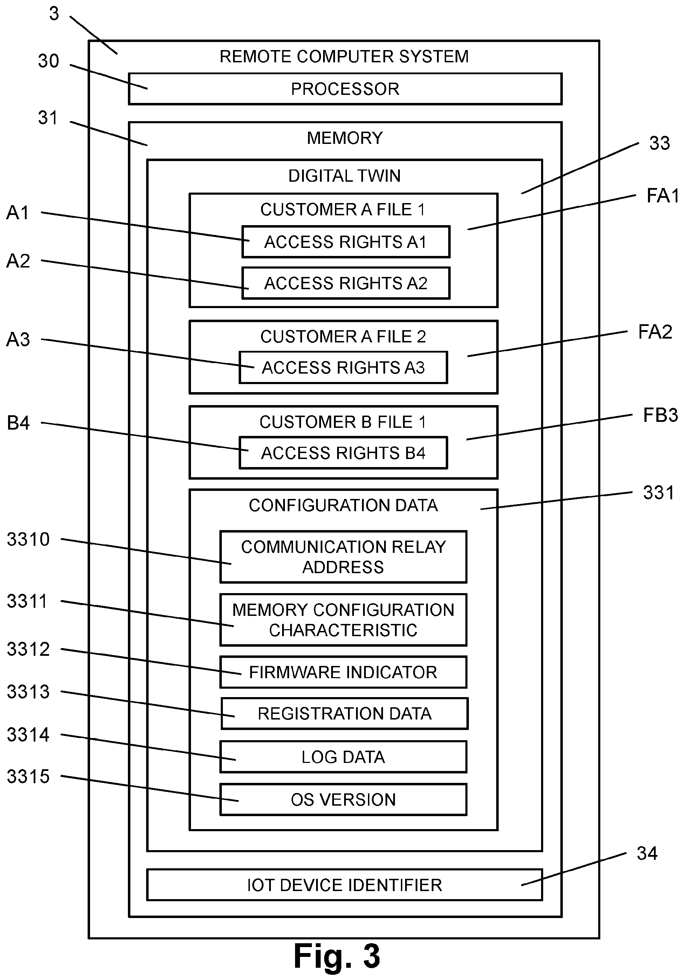

The remote computer system 3 comprises one or more computers with one or more processors 30 and a communication module 32 configured to communicate via the communication network 8 with the mobile communication device 2 and the customer back-end systems 4A, 4B associated with the remote computer system 3. The processors 30 are configured to execute one or more steps and/or functions as described herein. The remote computer system 3 is configured as a trusted service provider for the customer back-end systems 4A, 4B and associated IoT devices 1. The remote computer system 3 further comprises a memory 31 for storing data related to the loT device 1, as is explained below in more detail with reference to Figure 3.

The remote computer system 3 is arranged remotely from the loT device 1 and the mobile communication device 2, for example in a cloud-based computing center.

The customer back-end systems 4A, 4B each comprise one or more computers with one or more processors 40 and a communication module configured to communicate via the communication network 8 with the remote computer system 3 associated with the customer back-end system 4A, 4B. In an embodiment, the computer system 3 and the customer back-end system 4A, 4B are configured in one common computer center, e.g. as a cloud-based computing center. The customer back-end systems 4A, 4B are each connected to a customer client computer 5A, 5B which is used by the customers A, B to access the customer back-end systems 4A, 4B, in particular for configuring the access rights administered by the respective customer A, B.

**Figure 2** shows an embodiment where the loT device 1 is configured to exchange data with an access control terminal 6. Typically, data is exchanged using wireless short range communication R, however, in an embodiment, a wired connection is used.

In this embodiment, the loT device 1 is associated with a user, for example. Alternatively or additionally, the loT device 1 is associated with an item in the user's possession or control, for example a vehicle. The access rights stored on the loT device 1 enable access for the user to one or more access controlled environments. The access controlled environments include, for example, a physical environment, such as a stationary facility or part of a facility (e.g., an airport, office building, parking garage, warehouse, private house, room), or a portable facility (such as a vehicle). The access controlled environments may also comprise cyber environments, such as computer based resources, services, systems, servers, or the like. Access control is performed in conjunction with the access control terminal 6, using access rights 13 stored in the memory 12 of the loT device 1.

The access control terminal 6 is typically implemented as a fixedly installed device at or near a boundary or gateway to the access controlled environment. The access control terminal 6 may be battery powered and/or be connected to a permanent supply of electricity, e.g. via a mains connection. The access control terminal 6 may also be powered passively, e.g. using induction, particularly from the loT device 1. The access control terminal 6 comprises an electronic circuit 60 and an electronic communication circuit 61. The electronic circuit 60 is connected to the electronic communication circuit 61. The electronic circuit 60 comprises, for example, a processing unit and a memory and is configured to perform one or more steps and/or functions as described herein, in particular in conjunction with the electronic communication circuit 61.

The electronic communication circuit 61 comprises an RFID (Radio Frequency Identification), Near Field Communication (NFC), Bluetooth, or BLE (Bluetooth Low Energy) circuit, ultra wide-band (UWB), or another circuit for wireless data communication over a close range, such as up to a few meters, e.g. up to one to five meters, up to ten meters, or even up to hundred meters.

The access control terminal 6 includes further components, depending on the embodiment, for example an antenna connected to the electronic communication circuit 61, and/or a status indicator, the status indicator configured to indicate whether access control was authorized or not.

In an embodiment, the access control terminal 6 further comprises a proximity sensor configured to detect the loT device 1 within close proximity of the access control terminal 6.

Depending on the embodiment, the access control terminal 6 is connected to, or comprises, an actuator configured to provide or enable access for the user to the access controlled environment. For example, the actuator is connected to a door or gateway which is unlocked and/or opened by the actuator.

In another embodiment, the access control terminal 6 is connected to a computer system and configured to transmit to the computer system a message indicating whether access was authorized or denied.

In **Figure 3****,** reference numeral 33 refers to a digital twin of the loT device 1 stored in the memory 31 of the remote computer system 3. The digital twin 33 is a digital object associated with the loT device 1. The digital twin 33 reflects one or more properties of the loT device 1. In particular, the digital twin 33 stores a current set of access rights of the loT device 1, such that administrators of the remote computer system 3 have a complete record of the current set of access rights. The digital twin 33 represents, at least partially, an intended state of the loT device 1, in particular the memory 12 of the loT device 1.

In an embodiment, the digital twin 33 represents a complete intended state of the memory 12 of the loT device 1. This allows, for example, the loT device 1, to be quickly replaced, should the loT device 1 malfunction, break, or be lost. This is because, using the digital twin 33, a new IoT device 1 can be programmed such that the memory 12 is identical with the old, and now defunct, IoT device 1. In other words, the digital twin 33 allows for a complete reconstruction of the memory-state of the memory 12 of the loT device 1. Additionally, this allows for updating loT devices 1 in the field from a state which is out-of-date relative to a currently desired state as reflected in the digital twin 33.

For example, if access rights A1, A2, A3, B4 for the loT device 1 are updated by customer A and/or customer B, the digital twin 33 is first updated according to the updated access rights A1, A2, A3, B4. At this point in time, the loT device 1 still has the "old" access rights and must be updated according to the method described herein, such that the access rights on the loT device 1 reflect the updated "new" access rights A1, A2, A3, B4. Similarly, a firmware update or a memory reconfiguration is first reflected in an updated digital twin 33, leaving the loT device 1 itself to be updated, also according to the method described herein.

It is to be appreciated that when, throughout this disclosure, reference is made to a current set of access rights A1, A2, A3, B4, a current firmware 132, etc., the reference to 'current' is being made from a perspective of the digital twin 33. From a perspective of the loT device 1, however, the aforementioned 'current' access rights A1, A2, A3, B4, for example, may also be considered to be 'new' access rights A1, A2, A3, B4 with respect to 'old' access rights A1, A2, A3, B4 currently installed on the loT device 1. In other words, the 'old' access rights A1, A2, A3, B4 installed on IoT device 1 are updated with the current access rights A1, A2, A3, B4.

The digital twin 33 also stores log data 3314 which includes log events received from the loT device 1. The log events reflect, for example, status changes in the loT device 1, exceptions, and/or access control events. The log data 3314 also includes log events related to changes in the access rights A1, A2, A3, B4.

The plurality of access rights A1, A2, A3, B4 are divided into groups. In the example described with reference to Figure 3, the access rights A1, A2, A3, B4 are stored in a plurality of files FA1, FA2, FB3, however other arrangements, data structures, and/or grouping are also possible. In one implementation, each file FA1, FA2, FB3 corresponds to a particular access control environment, each file FA1, FA2, FB3 containing access rights A1, A2, A3, B4 for the loT device 1 for that particular access control environment. Specifically, if the access control environment is an office building, for example, then each access right A1, A2, A3, B4 is assigned to a particular door to which the loT device 1, more precisely the user carrying the loT device 1, has been authorized to access.

The loT device 1 therefore comprises, depending on the embodiment, access rights A1, A2, A3, B4 for different access control environments, stored in separate files FA1, FA2, FB3. The access control environments are managed by different entities, designated as customers A, B. Each customer A, B may set access rights A1, A2, A3, B4 for the loT device 1 to one or more access control environments.

In the example described with reference to Figure 3, customer A administers two access control environments and therefore customer A has two files FA1, FA2 storing access rights. In a first file FA1, associated with a first access control environment, there is stored a first access right A1 and a second access right A2. Each of the two access rights A1, A2 is associated with a particular access control terminal 6 of a first access control environment. In a second file FA2 associated with a second access control environment, there is an access right A3 stored which is associated with a particular access control terminal 6 of the second access control environment.

Similarly, customer B has a file FB3 which stores an access right B4 to an access control terminal 6 of an access control environment which customer B administers.

In addition to the access rights A1, A2, A3, B4 stored in a plurality of files FA1, FA2, FB3 stored in association with the customer A and the customer B, the digital twin 33 is also configured to store configuration data 331 of the loT device 1. The configuration data 331 includes a communication relay address 3310, which is a communication address of the mobile communication device 2 associated with the loT device 1, memory configuration characteristics 3311, a firmware indicator 3312, registration data 3313, log data 3314, and an operating system version 3315.

The memory configuration characteristics 3311 relate to the characteristics of the memory 12 of the loT device 1, in particular to a number of memory partitions of the memory 12 and their properties as described herein.

The firmware indicator 3312 relates to a current firmware associated with the digital twin 33, and comprises one or more of: a digital summary of the firmware, a digital digest, a firmware version indicator, or a firmware version time-stamp. In an embodiment, the digital twin 33 stores the current firmware, for example in a compiled form. The firmware installed on the loT device 1 may be out of date with respect to the current firmware as indicated by the firmware indicator 3312, such that an update of the firmware on the loT device 1 is to take place.

The registration data 3313 includes an address of the remote computer system 3.

The log data 3314 relates to logged events associated with the digital twin 33. The log data 3314 is updated according to log files received from the loT device 1.

The operating system version 3315 relates to a version of the operating system of the loT device 1. The operating system comprises additional functionality, for example functionality specific to the customers A, B, to the loT device 1, beyond what the firmware 132 already provides.

The configuration data 331 further includes, in an embodiment, one or more cryptographic keys used for encrypting data transmitted to the loT device 1 and/or for decrypting data received from the loT device 1. Further, additional cryptographic keys stored in the memory 31 of the remote computer system 3 may also be used for encrypted and/or decrypting data transmitted to and/or received from the loT device 1, respectively. For example, the cryptographic keys stored as part of the configuration data 331 include a public key of the loT Device 1, which public key is received from the loT device 1 as part of a registration message, for example. The cryptographic keys stored in the memory 31 of the remote computer system 3 include, for example, a private key of the remote computer system 3.

The memory 31 is further configured to store an loT device identifier 34, which is associated with the digital twin 33. The loT device identifier 34 can also be stored as part of the digital twin 33. The loT device identifier 34 includes, for example, a serial number or MAC address of the loT device 1.

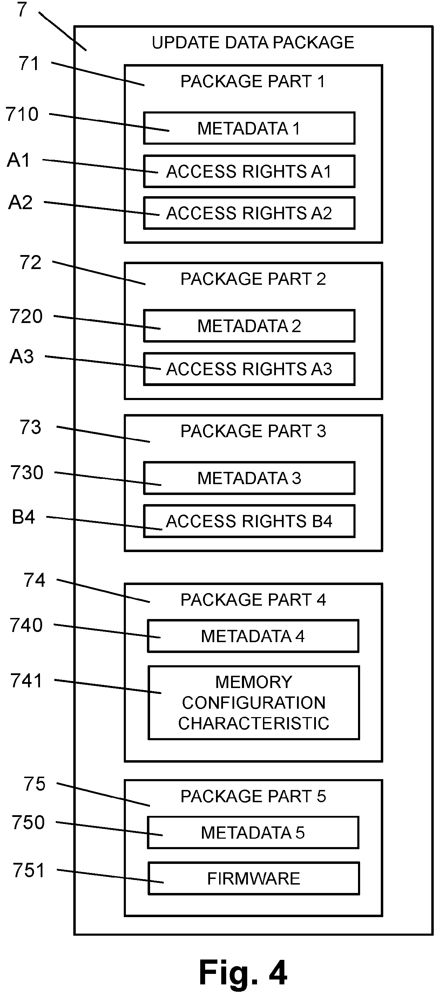

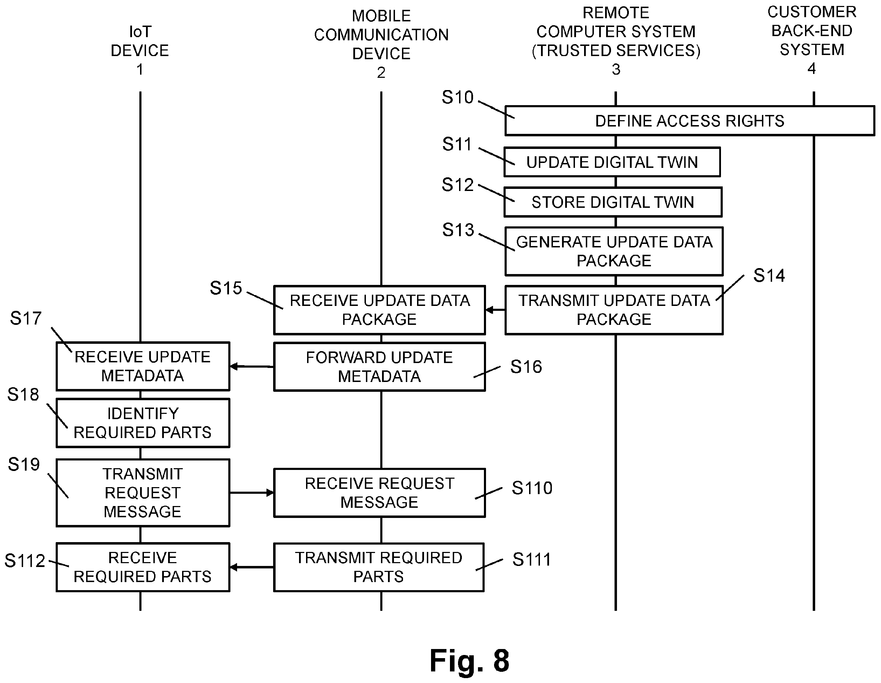

**Figure 4** shows a block diagram of an update data package 7. The update data package 7 is generated by the remote computer system 3 as described in more detail below with reference to Figure 8. The update data package 7 comprises a plurality of update package parts 71, 72, 73, 74, 75. A first set of update package parts 71, 72, 73 comprise access rights 13, in particular the access rights A1, A2, A3, B4. More specifically, a first update package part 71 includes access right A1, A2, a second update package part 72 includes access right A3, and a third update package part 73 includes access right B4.

Other update package parts 74, 75 include a memory configuration characteristic 741 and a firmware 751, respectively.

Each update package part 71, 72, 73, 74, 75 further includes metadata 710, 720, 730, 740, 750. The metadata 710, 720, 730, 740, 750 comprises, for example, a digital digest (e.g., a hash), a summary, a version number, a change date, a nonce, and/or a random number.

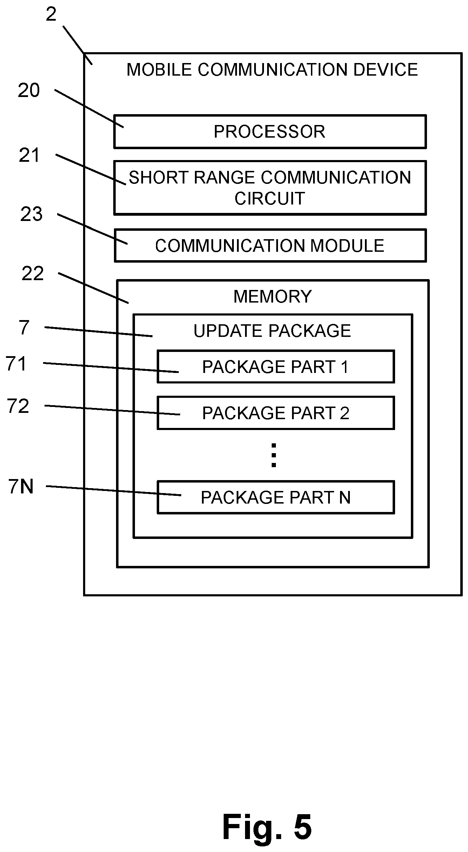

**Figure 5** shows a block diagram of the mobile communication device 2 having stored in the memory 22 the update package 7. The mobile communication device 2, after having received the update package 7 from the remote server computer 3, stores the update package 7 in the memory 12 for updating the loT device 1, as described in more detail with reference to Figure 8.

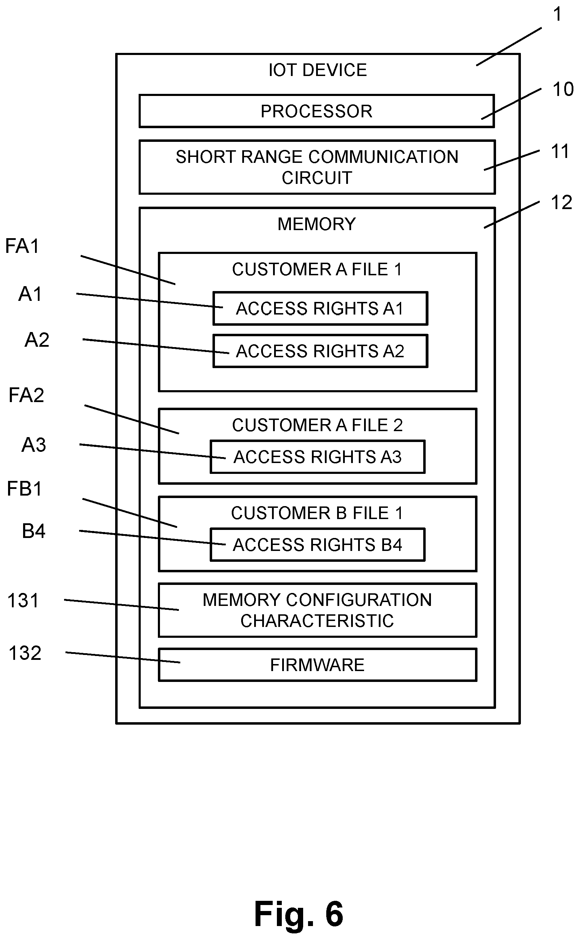

**Figure 6** shows a block diagram of the loT device 1 having stored in the memory 12 the access rights A1, A2, A3, B4 as received from the mobile communication device 2 as part of the update data package 7. The access rights A1, A2, A3, B4 are stored in a plurality of files FA1, FA2, FB1. Additionally, the memory 12 has a memory configuration characteristic 131 and has stored thereon firmware 132.

The processor 10 of the loT device 1 is configured such that it generates and/or identifies metadata of various items stored in the memory 12, in particular the files FA1, FA2, FB1 storing the access rights. The metadata of each file FA1, FA2, FB1 relates to the contents of, or identifies, the respective file FA1, FA2, FB1 and comprises, for example, a digital digest (e.g., a hash), a summary, a version number, a change date, a nonce, and/or a random number.

The metadata is, for example, be generated using the files FA1, FA2, FB1 and/or the access rights A1, A2, A3, B4. Alternatively, the metadata is retrieved from the memory 12. The metadata of each file FA1, FA2, FB1 is stored, for example, as part of each file (e.g. in a header part of the file) or separately from each file FA1, FA2, FB1 (for example as part of a directory structure of the memory 12).

The memory configuration characteristic 131 relates to: a number of partitions of the memory 131, a size of one or more of the memory partitions, a data format of one or more of the memory partitions, read and/or write permissions for one or more of the memory partitions, and/or a type of data to be stored in one or more of the memory partitions. More details relating to memory partitions of the memory 131 are described below with reference to Figure 7.

The firmware 132 relates to the software running on the loT device 1, in particular the software executed by the processor 10, such that the loT device 1 performs the steps and/or functions of the loT device 1 as described herein. The firmware 132 in particular controls the short-range communication circuit 11 for exchanging data, for example with the mobile communication device 2 and/or with the access control terminal 6.

The processor 10 is configured to generate, or retrieve from the memory 12, metadata related to the firmware 132. The metadata comprises one or more of: a digital summary of the firmware 132, a digital digest, a firmware version indicator, or a firmware version time-stamp. The processor 10 is configured such that the firmware 132 is updatable.

The memory 12 of the loT device 1 further includes, in an embodiment, one or more cryptographic keys used for decrypting data received from the remote computer system 3 and/or for encrypting data transmitted to the remote computer system 3. For example, the cryptographic keys include a public key of the remote computer system 3, which public key is received from the remote computer system 3 as a response to a registration message, for example. The cryptographic keys stored in the memory 12 of the loT device 1 include, for example, a private key of the loT device 1.

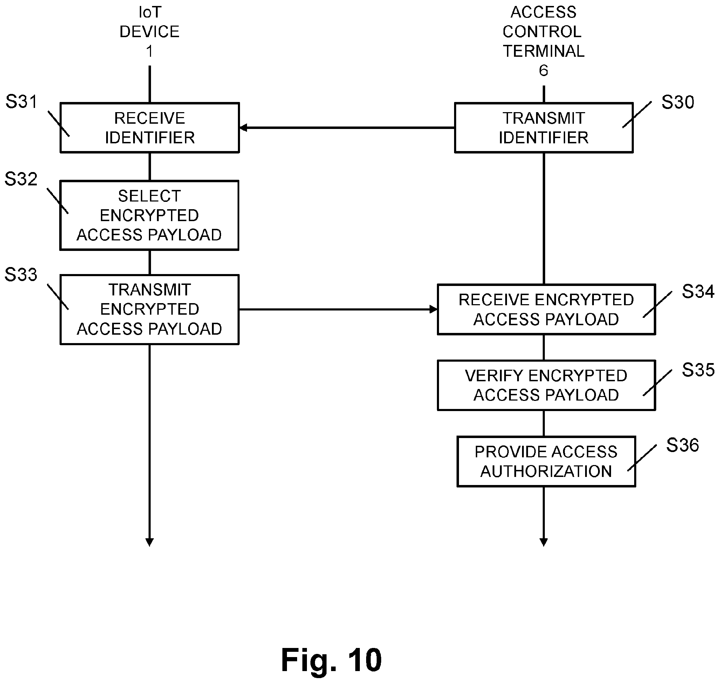

**Figure 7** shows a block diagram of the loT device 1 with the memory 12 partitioned into a plurality of memory partitions 120, 121, 122. The memory partitions 120, 121, 122 include a firmware partition 120 configured to store the firmware. The access rights partition 121 is configured to store the access rights A1, A2, A3, B4. The encrypted payload partition 122 is configured to store a particular type of access rights comprising a third party authentication key in which access authorization is performed in the access control terminal 6, using the third party authentication key, as is described below in more detail with reference to Figure 10.

Each memory partition 120, 121, 122 has a header, which stores, for example, a partition size, memory tables, one or more encryption types, and/or encryption Initialization Vectors. Additionally, one or more of the aforementioned may be stored for each data file individually, e.g. a particular data file comprises a header indicating an encryption type, a size of the data file, etc. As shown in Figure 7, the partition size of the memory partitions 120, 121, 122 is reconfigurable. Specifically, upon reception of the memory configuration characteristic 741 which forms, in an embodiment, part of the update data package 7, the processor 10 of the loT device 1 is configured to reconfigure the memory 12 according to the memory configuration characteristic 741. The memory 12 is reconfigured, for example, by increasing or decreasing the size of one or more memory partitions 120, 121, 122.

In the following paragraphs, described with reference to Figures 8 to 10 are a number of steps, described in an exemplary sequence, performed by the loT device 1, the mobile communication device 2, the computer system 3, and the customer back-end systems 4A, 4B or their processors 10, 20, 30, 40, respectively, for exchanging data via the communication network 8 between the loT device 1, the mobile communication device 2, the remote computer system 3, and/or the customer back-end system 4, respectively. In particular, possible sequences of steps are described for updating the loT device 1.

In a step S10 of **Figure 8****,** access rights for the loT device 1 are defined. The access rights are defined in the remote computer system 3 based on data received from the customer back-end system 4. The customer back-end system is operated by a particular customer, e.g. the customer A or the customer B. The access rights are configured such that, when they are downloaded to the loT device 1, they authorize the loT device 1 (in an example, specifically the person carrying the loT device 1) to access an access control environment. The customers A, B define the access rights using, for example, customer client computers 5A, 5B as described above with reference to Figure 1.

In an embodiment, the customer back-end system 4 is co-located with the remote computer system 3.

In an example, as part of defining the access rights, the remote computer system 3 can receive an identifier of the IoT device 1 from the customer back-end system 4, or transmit to the customer back-end system 4 a list of IoT devices 1 associated with the particular customer A, B, receiving thereafter from the customer back-end system a selected loT device 1.

In a step S11, the remote computer system 3 updates the digital twin 33 with the newly defined access rights. In particular, any changes to the access rights already stored as part of the digital twin 33, including additions, deletions, and/or modifications, are implemented.

In a step S12, the remote computer system 3 stores the newly updated access rights as part of the digital twin 33. The digital twin 33, at this particular time-point, has a current set of access rights. The loT device 1, at this particular time-point, has an out-of-date set of access rights which are to be updated through the following steps.

In a step S13, the remote computer system 3 generates an update data package7 . The update data package 7 comprises a plurality of update package parts 71, 72, 73, 74, 75 as described above with reference to Figure 4. At least some of the update package parts 71, 72, 73 include access rights A1, A2, A3, B4. The remaining update package parts 74, 75, may relate to, for example, a memory configuration characteristic 741 and/or a firmware 751.

The access rights included in the update package parts 71, 72, 73, are, in an embodiment, a complete set of the current access rights as stored in the digital twin 33. In other words, all the access rights of the digital twin 33 are included in the update data package 7.

In an embodiment, the update data package 7 is further generated, by the remote computer system 3, to include a firmware update package part 75. Specifically, the processor 30 of the remote computer system 3 generates the update data package 7 to include a current firmware 751, as defined by the firmware indicator 3312. Similarly, in an embodiment, the update data package 7 is further generated, by the remote computer system 3, to include a memory update package part 75, according to the memory configuration characteristic 3311. In an example, the update data package 7 does not contain any update package parts relating to access rights, in particular, it only contains the firmware update package part 75. The current firmware 751 can be considered, from the perspective of the loT device 1, to be 'new' firmware 751.

The update data package 7 is generated by the remote computer system 3 to include update metadata 710, 720, 730, 740, 750 relating to the contents of the update data package 7, in particular the update package parts 71, 72, 73, 74, 75, respectively.

In an embodiment, the update data package 7 and/or the update package parts 71, 72, 73, 74, 75 are digitally signed, by the remote computer system 3, using one or more cryptographic keys, e.g., including one or more keys belonging to one or more public/private key-pairs. Thereby, for example, a digital signature of the update data package 7 and/or its contents, including the update package parts 71, 72, 73, 74, 75 are included in the update data package 7. For example, a digital signature of a particular update data package part 71, 72, 73, 74, 75 is included in the particular update metadata 710. 720, 730, 740, 750, respectively. The cryptographic keys used include, for example, a private key of the remote computer system 3 and/or a public key of the loT device 1 stored in the remote computer system 3.

In an embodiment, the update data package 7 and/or the update package parts 71, 72, 73, 74, 75 are encrypted, by the remote computer system 3, using one or more cryptographic keys.

In a step S14, the update data package 7 is transmitted, by the remote computer system 3, via the communication network 8, to the mobile communication device 2.

In a step S15, the mobile communication device 2 receives the update data package 7 from the remote computer system 3 via the communication network 8. The update data package 7 is received while the mobile communication device 2 is connected to the communication network 8. It is not necessary that the mobile communication device 2 is simultaneously connected to the loT device 1. The mobile communication device 2 stores the received update data package 7 in the memory 22. Thereby, the mobile communication device 2 buffers the update data package 7 received from the remote computer system 3.

In a step S16, the mobile communication device 2 forwards update metadata 710, 720, 730, 740, 750 to the loT device 1 using short range communication. In particular, once the mobile communication device 2 is brought into communicative range with the loT device 1, the electronic communication circuit 21 of the mobile communication device 2 transmits the update metadata 710, 720, 730, 740, 750 to the loT device 1, where it is received by the electronic communication circuit 11 in a step S17.

In a step S18, the loT device 1 identifies which update package parts 71, 72, 73, 74, 75 of the update data package 7 are required. In particular, the processor 10 of the loT device 1 compares the received update metadata with the contents of the memory 12 to identify whether the update data package 7 includes any updates to the access rights, to the memory configuration, and/or to the firmware. To this end, the processor 10 retrieves, from memory 12, metadata relating to the contents of the memory 12. For example, the processor 10 retrieves metadata of each file FA1, FA2, FB1 containing access rights A1, A2, A3, B4. The retrieved metadata is then compared, by the processor 10, with the received update metadata 710, 720, 730, 740, 750. Additionally or alternatively, the processor 10 generates metadata of contents of the memory 12 and compares the generated metadata with the received update metadata 710, 720, 730, 740, 750. The comparison(s) performed by the processor 10 include, for example, comparing version numbers, digital digests, summaries, release dates, time-stamps, identifiers, etc.

In an embodiment, the loT device 1 is further configured to verify a digital signature of the update package 7 and/or one or more update package parts 71, 72, 73, 74, 75, as included in the received update metadata 710, 720, 730, 740, 750. Additionally, the loT device 1 is further configured to verify that the loT device 1 is the intended recipient of the update data package 7. For example, the digital signature is verified using one or more cryptographic keys. The cryptographic keys used include, for example, a public key of the remote computer system 3 and/or a private key of the loT device 1 stored in the memory 12.

In an embodiment, the loT device 1 is further configured to perform an integrity check on contents of the memory 12. The integrity check includes, for example, identifying missing, incomplete, and/or corrupted parts of the memory 12 and associating these with the update package parts 71, 72, 73, 74, 75 using the received update metadata. The loT device 1 is configured to identify required update package parts 71, 72, 73, 74, 75 using the results of the integrity check. For example, update package parts 71, 72, 73, 74, 75 are identified as required if they correspond to missing, incomplete, and/or corrupted parts of the memory 12.

The processor 10 then generates a request message including an indication of one or more required update package parts 71, 72, 73, 74, 75. For example, the request message includes update metadata 710, 720, 730, 740, 750 relating to update package parts 71, 72, 73, 74, 75 which have been modified and therefore are required to be updated.

In a step S19, the loT device 1 transmits the request message to the mobile communication device 2 using short range communication. In a step S110, the mobile communication device 2 receives the request message.

In a step S111, the mobile communication device 2 transmits one or more required update package parts 71, 72, 73, 74, 75 to the loT device 1.

In a step S112, the loT device 1 receives the required update package parts 71, 72, 73, 74, 75 from the mobile communication device 2. Typically, not all of the update package parts 71, 72, 73, 74, 75 will be required by the loT device 1. This is because the update package 7 contains, in an embodiment, a complete set of access rights A1, A2, A3, B4 for the loT device 1, not all of which have been updated since a last update. Therefore, typically only a subset of the update package parts 71, 72, 73, 74, 75 will be transmitted by the mobile communication device 2 to the loT device 1.

In an embodiment, the loT device 1 is configured to unencrypt one or more of the required update package parts 71, 72, 73, 74, 75 using a cryptographic key stored in the memory 12. The cryptographic key used is, for example, a public key of the remote computer system 3 or a private key of the loT device 1 stored in the memory 12.

In this manner, the loT device 1 is updated efficiently, as only those update package parts 71, 72, 73, 74, 75 required by the loT device 1 are transmitted from the mobile communication device 2 to the loT device 1. This is more efficient because the short range communication between the loT device 1 and the mobile communication device 2 typically has a lower bandwidth than the data communication between the mobile communication device 2 and the remote computer system 3. Further, by designing the data exchange in such a manner that the loT device 1 is configured to select required update package parts 71, 72, 73, 74, 75, the loT device 1 is able to, in an embodiment, restore missing, incomplete and/or corrupted parts of the memory 12.The loT device 1, in particular the processor 10, then implements the received update package parts 71, 72, 73, 74, 75. Implementing the received update package parts 71, 72, 73, 74, 75 includes, for example, updating the access rights A1, A2, A3, B4 stored in the memory 12, reconfiguring the memory 12 according to the memory configuration characteristic 131, and/or updating the firmware 132.

It is understood that, for example, access rights A1, A2, A3, B4, which are referred to in some places in the present disclosure as relating to 'current' access rights A1, A2, A3, B4, may be 'new' access rights A1, A2, A3, B4 for the loT device 1, i.e. have not previously been stored in the loT device 1.

In an embodiment, the memory 12 is reconfigured by the processor 10 and this includes, for example, the processor 10 resizing memory partitions 120, 121, 122, reallocating memory 12 from a particular memory partition 120, 121, 122 to another memory partition 120, 121, 122, reformatting one or more of the memory partitions 120, 121, 122, wiping (e.g. securely erasing) one or more of the memory partitions 120, 121, 122, and/or updating encryption keys for the one or more memory partitions 120, 121, 122, etc.

In an embodiment, the firmware 132 is updated by the processor 10 and this includes, for example, writing, deleting, and/or overwriting one or more components of the firmware 132 using the firmware 751 included in the received update data package 7.

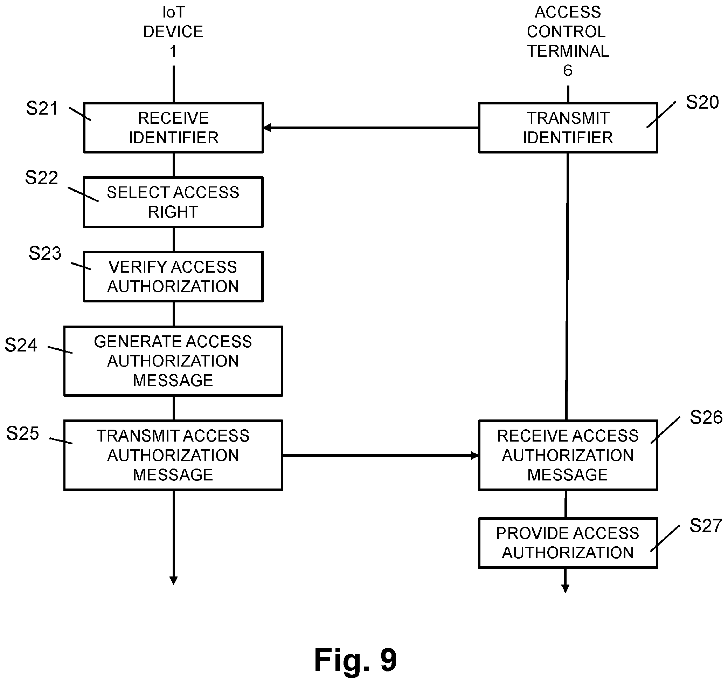

**Figure 9** relates to a number of steps for performing access authorization using the loT device 1. In particular, access authorization is performed in the loT device 1 on the basis of the access rights stored in the loT device 1 and an identifier of the access control terminal 6. To perform access control, the loT device 1 is brought into close communicative range with the access control terminal 6.

In a step S20, the access control terminal 6 transmits an access control identifier to the loT device 1. In particular, the electronic circuit 60 of the access control terminal 6 is configured to transmit, using the electronic communication circuit 61, the access control terminal identifier to the loT device 1 which is in close proximity. Close proximity is defined as being, for example within 10 meters, within 5 meters, within one meter, within 20 centimeters, or within 2 centimeters.

In a step S21, the loT device 1 receives the access control identifier. In particular, the processor 10 receives the access control terminal identifier using the electronic communication circuit 11.

In a step S22, the loT device 1, in particular the processor 10, selects an access right from memory 12 corresponding to the access control terminal identifier. The selection is performed, for example, by the processor 10 identifying an access right comprising an access control terminal identifier matching the received access control terminal identifier. If the processor 10 cannot select a corresponding access right, then access authorization is aborted and the access control terminal 6 does not provide access.

In an embodiment, the access control terminal 6 transmits, in addition to the access control terminal identifier or alternatively to the access control terminal identifier, a digitally signed message, for example signed using a cryptographic key stored in the loT device 1, such that the loT device 1 is able to confirm that the access control terminal 6 is legitimate. In an embodiment, the digitally signed message comprises the access control terminal identifier or otherwise identifies the access control terminal 6.

In a step S23, the loT device 1, in particular the processor 10, verifies access authorization using the received access control terminal identifier. In an example, access authorization is verified upon positive selection of an access right corresponding to the access control terminal identifier. In another example, the processor 10 checks, using a time-scheme of the access right and an internal clock of the loT device 1, whether the loT device 1 has access authorization at a particular current time.

In a step S24, the loT device 1, in particular the processor 10, generates an access authorization message. The access authorization message is configured such that the access control terminal 6 grants access upon reception.

In an embodiment, the access authorization message is digitally signed using a cryptographic key stored in the loT device 1.

In a step S25, the loT device 1, in particular the processor 10 using the electronic communication circuit 11, transmits the access authorization message to the access control terminal 6.

In a step S26, the access control terminal 6 receives the access authorization message. The access control terminal 6, in an embodiment, validates the digitally signed access authorization message.

In a step S27, the access control terminal 6 provides access authorization to the access control environment. Providing access authorization comprises, depending on the embodiment and the type of access control environment, transmitting a control signal to an actuator of a lock, doorway, or other entryway. In another embodiment, providing access authorization comprises allowing access to a cyber-environment.

**Figure 10** illustrates a number of steps for performing access authorization using the loT device 1. In particular, access authorization is performed in the access control terminal 6 using the access rights, in particular comprising an encrypted access payload, transmitted from the loT device 1 to the access control terminal 6. To perform access control, the loT device 1 is brought into close proximity with the access control terminal 6. Close proximity is defined as being, for example within 10 meters, within 5 meters, within one meter, within 20 centimeters, or within 2 centimeters.

In a step S30 which is analogous to step S20 described above, the access control terminal 6 transmits the access control terminal identifier to the loT device 1, which receives the access control terminal identifier in a step S31.

In a step S32, the loT device 1, in particular the processor 10, selects an access right corresponding to the access control terminal identifier. In this case, the access right comprises an encrypted access payload. The encrypted access payload comprises a third party authentication key configured by the manufacturer or operator of the access control terminal 6. The encrypted access payload is, for example, initially provided to the remote computer system 3 via the customer back-end system 4. If no corresponding access right is selected, access control is terminated. The access right is selected by, for example, matching an access control terminal identifier included in the access right with the received access control terminal identifier.

In a step S33, the loT device 1 transmits the encrypted access payload using short range communication to the access control terminal 6.

In a step S34, the access control terminal 6, in particular the electronic circuit 60 using the electronic communication circuit 61, receives the encrypted access payload.

In a step S35, the access control terminal 6 verifies the encrypted access payload. Verifying the encrypted access payload includes, for example, decrypting, in the electronic circuit 60, the encrypted access payload and validating the third party authentication key.

In a step S36 which is analogous to step S27 described above, the access control terminal provides access authorization.

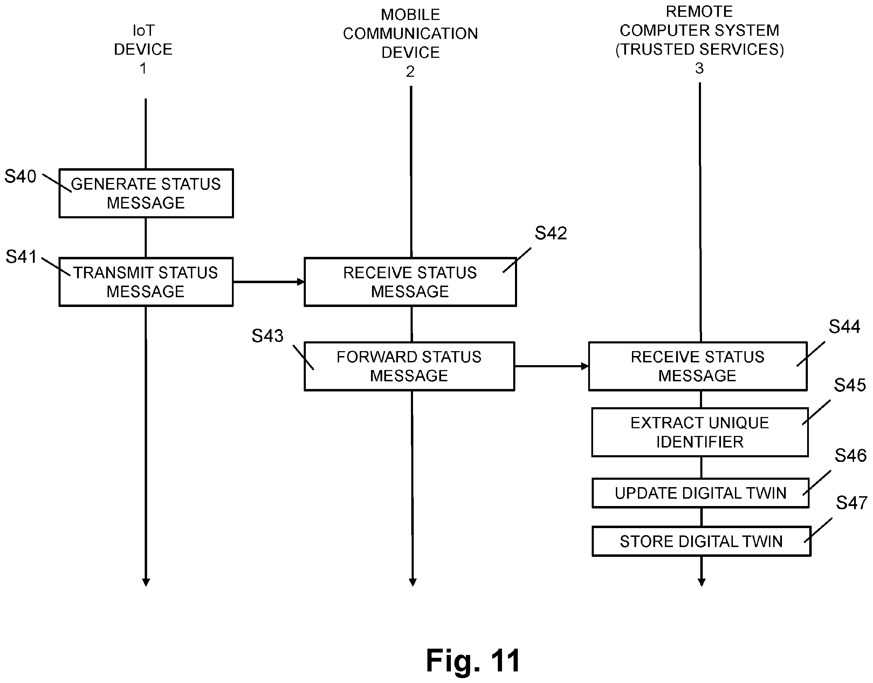

**Figure 11** illustrates a number of steps for transmitting a status message, by the loT device 1, to the remote computer system 3.

In a step S40, the loT device 1, in particular the processor 10, generates a status message. The status message includes the loT device identifier 34 and further comprises, for example, status changes in the loT device 1, for example indicating that the access rights were updated, that the memory configuration 131 of the memory 12 was updated, and/or that the firmware 132 was updated. The status message also comprises, for example, exceptions (e.g. errors that occur in the processor 10 and/or the memory), and/or access control events. For example, the status message indicates access control terminal 6 at which access control was performed, (i.e. includes an access control terminal identifier and optionally one or more times at which access control was performed at a particular access control terminal 6).

In an embodiment, the status message is transmitted by the loT device 1 during commissioning of the loT device 1.

In an embodiment, the status message comprises an address of the remote computer system 3, such that the mobile communication device 2 is enabled to forward the status message to the remote computer system 3 using the address indicated in the status message, without having to have previously stored, or otherwise receive or retrieve, the address of the remote computer system 3.

In a step S41, the loT device 1, in particular the processor 10, transmits the status message to the mobile communication device 2 via short range communication.

In a step S42, the mobile communication device 2 receives the status message. For this to occur, the mobile communication device 2 must be brought into communication range with the loT device 1. The status message is stored in memory 22 of the mobile communication device 2, until the mobile communication device 2 is connected, via the communication network 8, with the remote computer system 3.

In a step S43, the mobile communication device 2 forwards the status message, via the communication network 8, to the remote computer system 3.

In a step S44, the remote computer system 3 receives the status message via the communication network 8. The remote computer system 3 identifies the communication address of the mobile communication device 2.

In a step S45, the loT device identifier 34 is extracted, by the processor 30 of the remote computer system, from the status message.

The processor 30 is configured to check whether there is stored, in the memory 31 of the remote computer system 3, a loT device identifier 34 corresponding to the extracted loT device identifier 34. If there is not, that indicates that the loT device 1 was not previously registered in the remote computer system 3. The remote computer system 3 is configured to generate, for the loT device 1, a digital twin 33, and store the digital twin 33 in the memory 31.

If the loT device identifier 34 extracted matches a stored IoT device identifier 34, the remote computer system 3 proceeds.

In a step S46, the remote computer system 3 is configured to update the digital twin 33 using the status message. In particular, the log events are stored as part of the digital twin 33.

Further, if the communication address does not match the communication relay address 3310 stored in the digital twin 33, or if the digital twin 33 has been newly generated, the communication relay address 3310 is updated or stored, respectively, as the communication address of the mobile communication device 2. In such a manner, only one single mobile communication device 2 is designated as a relay device for the loT device 1 at any particular point in time.

In a step S47, the updated digital twin 33 is stored, by the processor 30, in the memory 31 of the remote computer system 3.

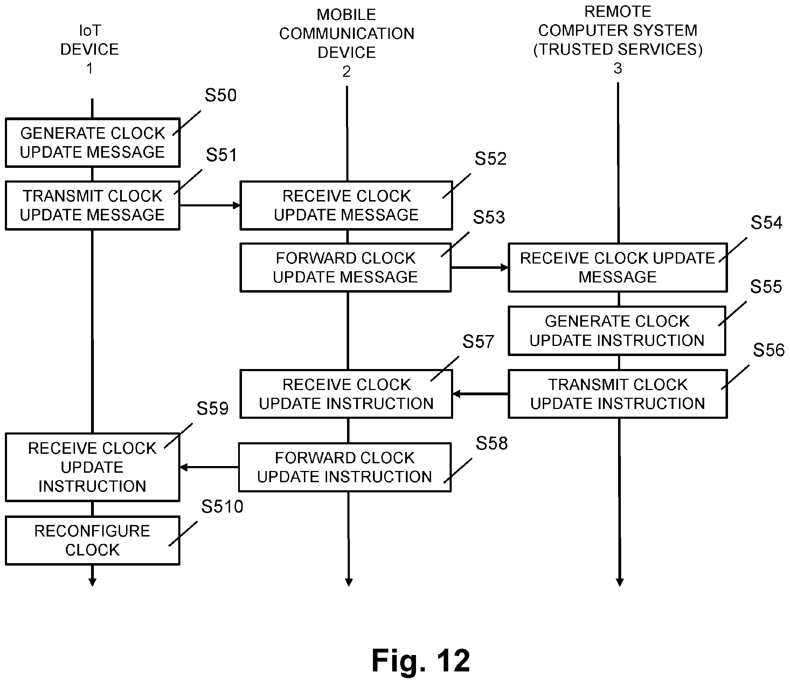

**Figure 12** illustrates a number of steps performed for updating an internal clock of the loT device 1. The internal clock of the loT device 1 is used, by the processor of the loT device 1, for verifying access control, in particular for checking whether a current time at which access control is being performed corresponds to a time, as indicated by the time-scheme of the particular access right, during which access control is authorized. Due to clock drift over time, it is necessary to periodically reconfigure the clock as detailed below.

In a step S50, the loT device 1, in particular the processor 10, generates a clock update message. The clock update message can also form, for example, part of the status message described above. The clock update message includes the loT device identifier 34 of the loT device 1.

In a step S51, the clock update message is transmitted, from the loT device 1, to the mobile communication device 2, where it is received in a step S52. The processor 10 is configured to store, in the memory 12, a time-stamp from the clock indicating a time-point at which the clock update message was transmitted.

In a step S53, the clock update message is forwarded, by the mobile communication device 2, to the remote computer system 3, via the communication network 8. In a step S54, the remote computer system 3 receives the clock update message.

In a step S55, the remote computer system 3 generates a clock update instruction which includes a current time-stamp of the remote computer system 3, in particular of a clock of the remote computer system 3. Depending on the embodiment, the remote computer system 3 generates the clock update instruction using a current time received from an external time server.

In an embodiment, the remote computer system 3 digitally signs the clock update instruction such that the loT device 1 can verify the legitimacy of the clock update instruction. For example, the remote computer system 3 uses one or more cryptographic keys to digitally sign the clock update instruction. In this manner, a digital signature is included in the clock update instruction. Further, the digital signature may indicate the particular loT device 1 as an intended recipient. The cryptographic keys used may, for example, include a private key of the remote computer system 3 and/or a public key of the loT device 1.

In a step S56, the clock update instruction is transmitted, from the remote computer system 3 to the mobile communication device 2 via the communication network 8. In a step S57, the mobile communication device 2 receives the clock update instruction.

In a step S58, the mobile communication device 2 forwards the clock update instruction via short range communication to the loT device 1.

In a step S59, the loT device 1 receives the clock update instruction. The loT device 1 compares a current time, as indicated by its clock, with the stored time-stamp which indicates a time-point at which the clock update message was transmitted. If a difference between the current time and the stored time-point does not exceed a pre-defined period, for example less than 20 seconds, for example less than 10 seconds, or for example less than 5 seconds, then the clock update instruction is accepted. This ensures that the clock update instruction was received promptly and without undue delay such that the clock update instruction reflects, to within a degree of accuracy as defined by the pre-defined period, the actual time as determined by the remote computer system 3. It will be appreciated that for this to occur it is necessary for the mobile communication device 2 to simultaneously be in communicative range with the loT device 1 and connected to the loT device 1, and also connected to the remote server 3 via the communication network 8, for at least some of the steps illustrated in Figure 12.

In an embodiment, the loT device 1 verifies a digital signature included in the clock update instruction, thereby verifying the legitimacy of the clock update instruction. For example, the loT device 1 uses one or more cryptographic keys to verify that the clock update instruction was signed by of the remote computer system 3. Additionally, it may be verified that the clock update instruction was intended for the particular loT device 1. The cryptographic keys used include, for example, a public key of the remote computer system 3 and/or a private key of the loT device 1 stored in the memory 12.

In a step S510, the loT device 1 reconfigures the clock using the clock update instruction. In particular, the processor 10 of the loT device 1 updates its internal clock using the current time-stamp of the remote computer system 3 contained in the clock update instruction.

It should be noted that, in the description, the sequence of the steps has been presented in a specific order, one skilled in the art will understand, however, that the order of at least some of the steps could be altered, without deviating from the scope of the disclosure.

## Claims

1. A method of communicating between an Internet of Things device (1) and a remote computer system (3), the method comprising:
storing (S12) in the remote computer system (3), linked to a unique identifier (34) of an Internet of Things device (1), a digital twin (33) of the Internet of Things device (1), the digital twin (33) comprising a current set of access rights (13) for the Internet of Things device (1) and configuration data (331) including an address of a mobile communication device (2), as a communication relay address (3310);
generating (S13) in the remote computer system (3), for the Internet of Things device (1), an update data package (7), divided into a plurality of update package parts (71, 72, 73), each update package part (71, 72, 73) including a subset of the current set of access rights (13) and update metadata (710, 720, 730) for the update package part;
transmitting (S14) via a mobile radio communication network the update data package (7) for the Internet of Things device (1), from the remote computer system (3) to the mobile communication device (2), using the communication relay address (3310) linked to the unique identifier (34) of the Internet of Things device (1);
receiving (S17), in the Internet of Things device (1), the update metadata (710, 720, 730) for each of the update package parts (71, 72, 73), from the mobile communication device (2) via close range communication;
identifying (S18), in the Internet of Things device (1), one or more required update package parts (71, 72, 73), using the update metadata (710, 720, 730) received from the mobile communication device (2) and stored metadata relating to one or more sets of access rights (13) stored in a memory of the Internet of Things device (1);
transmitting (S19), from the Internet of Things device (1) to the mobile communication device (2), via the close range communication, a request message indicating the one or more required update package parts (71, 72, 73); and
receiving (S110), in the Internet of Things device (1) from the mobile communication device (2), via the close range communication, the one or more required package parts (71, 72, 73) of the update data package (7) as indicated in the request message.

2. Method according to claim 1, wherein the current set of access rights (13) authorize access, for the Internet of Things device (1), to one or more access control terminals (6), a particular access right (1300, 1301, 1302, 1303) of the current set of access rights (13) relating to a particular access control terminal (6) and comprising one or more of: an access control terminal identifier, an access control terminal cryptographic key, or an access time scheme, and wherein access is authorized according to the following steps:
receiving (S21), in the Internet of Things device (1), from the particular access control terminal (6) via short range communication, the access control terminal identifier;
verifying (S23), in the Internet of Things device (1), access authorization using the particular access right (1300, 1301, 1302, 1303) and the received access control terminal identifier;
generating (S24), in the Internet of Things device (1), using the particular access right (1300, 1301, 1302, 1303), an access authorization message; and
transmitting (S25), from the Internet of Things device (1), to the access control terminal (6) via short range communication, the access authorization message.

3. Method according to one of claims 1 or 2, wherein the current set of access rights (13) authorize access, for the Internet of Things device (1), to one or more access control terminals (6), a particular access right (1300, 1301, 1302, 1303) of the current set of access rights (13) relating to a particular access control terminal (6) and comprising an encrypted access payload, and wherein access is authorized according to the following steps:
transmitting (S30), from the Internet of Things device (1) to the access control terminal (6) via short range communication, the encrypted access payload;
verifying (S34), in the access control terminal (6), the encrypted access payload; and
authorizing (S35), in the access control terminal (6), access for the Internet of Things device (1).

4. Method according to one of claims 1 to 3, the method comprising:
storing, in the remote computer system (3), the configuration data of the digital twin (33) further including a memory configuration characteristic (3311, 741, 131) including a memory allocation of a plurality of memory partitions (120, 121, 122);
generating the update data package (7) to include, in a memory update package part (74) of the plurality of update package parts (71, 72, 73, 74, 75), the memory configuration characteristic (3311, 741, 131) and metadata (740) for the memory update package part (74); and
receiving, in the Internet of Things device (1) from the mobile communication device (2), via the close range communication, the particular update package part (74) including the memory configuration characteristic (3311, 741, 131).

5. Method according to one of claims 1 to 4, the method comprising:
storing, in the remote computer system (3), the configuration data of the digital twin (33) including a current firmware indicator (3312);
generating the update data package (7) to include, in a firmware update package part (75) of the plurality of update package parts (71, 72, 73, 74, 75), a current firmware (751, 132) according to the current firmware indicator (3312) and metadata (750) for the firmware update package part (75); and
receiving, in the Internet of Things device (1) from the mobile communication device (2), via the close range communication, the firmware update package part (75) including the current firmware (751, 132).

6. The method of one of claims 1 to 5, further comprising:
transmitting (S41) via a close range communication an upload status message for the remote computer system (3) from the Internet of Things device (1) to a mobile communication device (2), within the close range of the Internet of Things device (1), for forwarding to the remote computer system (3) via a mobile radio communication network, the upload status message including a unique identifier (34) of the Internet of Things device (1);
receiving (S44) in the remote computer system (3) the upload status message from the Internet of Things device (1), as forwarded by the mobile communication device (2) via the mobile radio communication network; and
storing (S47) in the remote computer system (3) the unique identifier (34) linked to the digital twin (33) of the Internet of Things device (1).

7. The method of claim 6, further comprising:
storing (S47) in the remote computer system (3) the configuration data of the digital twin (33) including the address of the mobile communication device (2) as the communication relay address (3310).

8. Method according to one of claims 1 to 7, the method further comprising:
transmitting (S51), from the Internet of Things device (1), a clock update request for the remote computer system (3), to the mobile communication device (2) via close range communication;
receiving (S54), in the remote computer system (3), the clock update message from the Internet of Things device (1), as forwarded by the mobile communication device (2) via the mobile radio communication network;
transmitting (S56), via the mobile radio communication network a clock update instruction including a current time-stamp for the Internet of Things device (1), from the remote computer system (3) to the mobile communication device (2), using the communication relay address (3310) linked to the unique identifier (34) of the Internet of Things device (1);
receiving (S59), in the Internet of Things device (1), the clock update instruction, from the mobile communication device (2) via close range communication; and
reconfiguring (S510) a clock of the Internet of Things device (1) according to the current time-stamp, provided that a time difference between transmitting of the clock update request and receiving the clock update instruction does not exceed a pre-defined timeout.

9. A remote computer system (3) for communicating with an Internet of Things device (1), the computer system comprising a communication module (32) configured to exchange data with a mobile communication device (2) via a mobile radio communication network; wherein the remote computer system (3) further comprises:
a memory (31) configured to store a digital twin (33) of the Internet of Things device (1) linked to a unique identifier (34) of the Internet of Things device (1), the digital twin (33) comprising a current set of access rights (13) for the Internet of Things device (1) and configuration data (331) including an address of a mobile communication device (2), as a communication relay address (3310);
a processor (30) configured to generate (S13), for the Internet of Things device (1), an update data package (7) divided into a plurality of update package parts (71, 72, 73), each update package part (71, 72, 73) including a subset of the current set of access rights (13) and update metadata (710, 720, 730) for the update package part (71, 72, 73);
the processor (30) configured to transmit (S14) via the mobile radio communication network the update data package (7) for the Internet of Things device (1) to the communication relay address (3310) linked to the unique identifier (34) of the Internet of Things device (1), for forwarding (S16), by the mobile communication device (2), via close range communication, one or more required update package parts (71, 72, 73), as indicated by a request message received by the mobile communication device (2) from the Internet of Things device (1).

10. The remote computer system (3) of claim 9, wherein the processor (30) is further configured to extract (S45), from an upload status message from the Internet of Things device (1), as received by the mobile communication device (2) from the Internet of Things device (1) via a close range communication circuit and forwarded by the mobile communication device (2) via the mobile radio communication network to the computer system (3), the unique identifier (34) of the Internet of Things device (1) linked to the digital twin (33), and to store (S47) in the memory of the remote computer system (3) an address of the mobile communication device (2), as a communication relay address (3310), as part of the configuration data (331) of the digital twin (33) of the Internet of Things device (1).

11. The remote computer system (3) of one of claims 9 or 10, wherein the processor (30) is further configured:
to receive (S54) a clock update message from the Internet of Things device (1), as received by the mobile communication device (2) from the Internet of Things device (1) via a close range communication circuit and forwarded (S53) by the mobile communication device (2) via the mobile radio communication network to the computer system (3),
to generate (S55) a clock update instruction including a current time-stamp for the Internet of Things device (1), and
to transmit (S56) via the mobile radio communication network the clock update instruction for the Internet of Things device (1) to the communication relay address (3310) linked to the unique identifier (34) of the Internet of Things device (1), for forwarding by the mobile communication device (2) via the close range communication circuit to the Internet of Things device (1).

12. The remote computer system (3) of one of claims 9 to 11, wherein the current set of access rights (13) authorize access, for the Internet of Things device (1), to one or more access control terminals (6), a particular access right (1300, 1301, 1302, 1303) of the current set of access rights (13) relating to a particular access control terminal (6) and comprising one or more of: an access control terminal identifier, an access control terminal cryptographic key, or an access time scheme.

13. The remote computer system (3) of one of claims 9 to 12, wherein the current set of access rights (13) authorize access, for the Internet of Things device (1), to one or more access control terminals (6), a particular access right (1300, 1301, 1302, 1303) of the current set of access rights (13) relating to a particular access control terminal (6) and comprising an encrypted access payload.

14. An Internet of Things device (1), comprising an electronic communication circuit (11) for close range communication, a processor (10) connected to the electronic communication circuit (11), and a memory (12), wherein the processor (10) is configured to:
receive (S17), from a remote computer system (3) update metadata (710, 720, 730) as forwarded by a mobile communication device (2), the update metadata (710, 720, 730) relating to each of a plurality of update package parts (71, 72, 73) of an update data package (7) received by the mobile communication device (2);
identify (S18) one or more required update package parts (71, 72, 73), using the update metadata (710, 720, 730) received from the mobile communication device (2) and stored metadata relating to one or more sets of access rights (13) stored in the memory (12) of the Internet of Things device (1);
transmit (S19), from the Internet of Things device (1) to the mobile communication device (2), via the close range communication, a request message indicating the one or more required update package parts (71, 72, 73); and
receive (S112), in the Internet of Things device (1) from the mobile communication device (2), via the close range communication, the one or more required update package parts (71, 72, 73) of the update data package (7) as indicated in the request message.

15. The Internet of Things device (1) of claim 14, wherein the Internet of Things device (1) is configured to acquire the current set of access rights (13) using the received required package parts (71, 72, 73) of the update data package (7), the current set of access rights (13) authorizing access, for the Internet of Things device (1), to one or more access control terminals (6), a particular access right (1300, 1301, 1302, 1303) of the current set of access rights (13) relating to a particular access control terminal (6) and comprising one or more of: an access control terminal identifier, an access control terminal cryptographic key, or an access time scheme, and wherein the processor (10) is further configured to:
receive (S21), using the electronic communication circuit (11), from the particular access control terminal (6) via short range communication, the access control terminal identifier;
verify (S23) access authorization using the particular access right (1300, 1301, 1302, 1303) and the received access control terminal identifier;
generate (S24), using the particular access right (1300, 1301, 1302, 1303), an access authorization message; and
transmit (S25), using the electronic communication circuit (11), to the access control terminal (6) via short range communication, the access authorization message.

16. The Internet of Things device (1) of one of claims 14 or 15, wherein the Internet of Things device (1) is configured to acquire the current set of access rights (13) using the received required package parts (71, 72, 73) of the update data package (7), the current set of access rights (13) authorizing access, for the Internet of Things device (1), to one or more access control terminals (6), a particular access right (1300, 1301, 1302, 1303) of the current set of access rights (13) relating to a particular access control terminal (6) and comprising an encrypted access payload, and wherein the processor (10) is further configured to transmit (S33) to the access control terminal (6), using the electronic communication circuit (11), the encrypted access payload.

## Patentansprüche

1. Verfahren zur Kommunikation zwischen einer Internet-der-Dinge-Vorrichtung (1) und einem Remote-Computersystem (3), das Verfahren umfasst:
Speichern (S12) eines Digitalen Zwillings (33) der Internet-der-Dinge-Vorrichtung (1) im Remote-Computersystem (3), verknüpft mit einer eindeutigen Kennung (34) der Internet-der-Dinge-Vorrichtung (1), wobei der Digitale Zwilling (33) einen aktuellen Satz von Zugriffsrechten (13) für die Internet-der-Dinge-Vorrichtung (1) und Konfigurationsdaten (331) umfasst, die eine Adresse eines mobilen Kommunikationsgeräts (2) als Kommunikationsrelaisadresse (3310) enthalten;
Erzeugen (S13) eines Aktualisierungsdatenpakets (7) für die Internet-der-Dinge-Vorrichtung (1) im Remote-Computersystem (3), das in mehrere Aktualisierungspaketteile (71, 72, 73) unterteilt ist, wobei jeder Aktualisierungspaketteil (71, 72, 73) eine Teilmenge des aktuellen Satzes von Zugriffsrechten (13) und Aktualisierungsmetadaten (710, 720, 730) für den Aktualisierungspaketteil enthält;
Übertragen (S14) des Aktualisierungsdatenpakets (7) für die Internet-der-Dinge-Vorrichtung (1) über ein mobiles Funkkommunikationsnetzwerk vom Remote-Computersystem (3) an das mobile Kommunikationsgerät (2) unter Verwendung der Kommunikationsrelaisadresse (3310), die mit der eindeutigen Kennung (34) der Internet-der-Dinge-Vorrichtung (1) verknüpft ist;
Empfangen (S17) der Aktualisierungsmetadaten (710, 720, 730) für jeden der Aktualisierungspaketteile (71, 72, 73) in der Internet-der-Dinge-Vorrichtung (1) vom mobilen Kommunikationsgerät (2) über Nahbereichskommunikation;
Identifizieren (S18) eines oder mehrerer erforderlicher Aktualisierungspaketteile (71, 72, 73) in der Internet-der-Dinge-Vorrichtung (1) unter Verwendung der vom mobilen Kommunikationsgerät (2) empfangenen Aktualisierungsmetadaten (710, 720, 730) und gespeicherter Metadaten, die sich auf einen oder mehrere Sätze von Zugriffsrechten (13) beziehen, die in einem Speicher der Internet-der-Dinge-Vorrichtung (1) gespeichert sind;
Senden (S19) einer Anforderungsnachricht, die den einen oder die mehreren erforderlichen Aktualisierungspaketteile (71, 72, 73) angibt, von der Internet-der-Dinge-Vorrichtung (1) an das mobile Kommunikationsgerät (2) über die Nahbereichskommunikation; und
Empfangen (S110) des einen oder der mehreren erforderlichen Paketbestandteile (71, 72, 73) des Aktualisierungsdatenpakets (7), wie in der Anforderungsnachricht angegeben, in der Internet-der-Dinge-Vorrichtung (1) vom mobilen Kommunikationsgerät (2) über die Nahbereichskommunikation.

2. Verfahren gemäß Anspruch 1, wobei der aktuelle Satz von Zugriffsrechten (13) der Internet-der-Dinge-Vorrichtung (1) Zugriff auf ein oder mehrere Zugriffskontrollterminals (6) autorisiert, wobei ein bestimmtes Zugriffsrecht (1300, 1301, 1302, 1303) des aktuellen Satzes von Zugriffsrechten (13), das sich auf ein bestimmtes Zugriffskontrollterminal (6) bezieht und eines oder mehrere der Folgenden umfasst: einen Zugriffskontrollterminalidentifikator, einen kryptografischen Schlüssel des Zugriffskontrollterminals oder ein Zugriffszeitschema, und wobei der Zugriff gemäß den folgenden Schritten autorisiert wird:
Empfangen (S21) des Zugriffskontrollterminalidentifikators in der Internet-der-Dinge-Vorrichtung (1) von dem bestimmten Zugriffskontrollterminal (6) über Kurzstreckenkommunikation;
Überprüfen (S23) einer Zugriffsberechtigung in der Internet-der-Dinge-Vorrichtung (1) unter Verwendung des bestimmten Zugriffsrechts (1300, 1301, 1302, 1303) und des empfangenen Zugriffskontrollterminalidentifikators;
Erzeugen (S24) einer Zugangsberechtigungsnachricht in der Internet-der-Dinge-Vorrichtung (1) unter Verwendung des bestimmten Zugriffsrechts (1300, 1301, 1302, 1303); und
Senden (S25) der Zugangsberechtigungsnachricht von der Internet-der-Dinge-Vorrichtung (1) an das Zugriffskontrollterminal (6) über eine Kurzstreckenkommunikation.

3. Verfahren gemäß einem der Ansprüche 1 oder 2, wobei der aktuelle Satz von Zugriffsrechten (13) der Internet-der-Dinge-Vorrichtung (1) Zugriff auf ein oder mehrere Zugriffskontrollterminals (6) autorisiert, wobei ein bestimmtes Zugriffsrecht (1300, 1301, 1302, 1303) des aktuellen Satzes von Zugriffsrechten (13), das sich auf ein bestimmtes Zugriffskontrollterminal (6) bezieht und eine verschlüsselte Zugangsnutzlast umfasst, und wobei der Zugriff gemäß den folgenden Schritten autorisiert wird:
Übertragen (S30) der verschlüsselten Zugangsnutzlast von der Internet-der-Dinge-Vorrichtung (1) an das Zugriffskontrollterminal (6) über eine Kurzstreckenkommunikation;
Überprüfen (S34) der verschlüsselten Zugangsnutzlast im Zugriffskontrollterminal (6); und
Autorisieren (S35) eines Zugriffs für die Internet-der-Dinge-Vorrichtung (1) im Zugriffskontrollterminal (6).

4. Verfahren gemäß einem der Ansprüche 1 bis 3, wobei das Verfahren umfasst:
Speichern der Konfigurationsdaten des Digitalen Zwillings (33) im Remote-Computersystem (3), wobei diese ferner ein Speicherkonfigurationsmerkmal (3311, 741, 131) umfassen, das eine Speicherzuweisung einer Vielzahl von Speicherpartitionen (120, 121, 122) beinhaltet;
Erzeugen des Aktualisierungsdatenpakets (7), um in einem Speicheraktualisierungspaketteil (74) der mehreren Aktualisierungspaketteile (71, 72, 73, 74, 75) das Speicherkonfigurationsmerkmal (3311, 741, 131) und Metadaten (740) für das Speicheraktualisierungspaketteil (74) aufzunehmen; und
Empfangen des bestimmten Aktualisierungspaketteils (74), das das Speicherkonfigurationsmerkmal (3311, 741, 131) enthält, in der Internet-der-Dinge-Vorrichtung (1) vom mobilen Kommunikationsgerät (2) über die Nahbereichskommunikation.

5. Verfahren gemäß einem der Ansprüche 1 bis 4, wobei das Verfahren umfasst:
Speichern der Konfigurationsdaten des Digitalen Zwillings (33), einschließlich eines aktuellen Firmware-Indikators (3312), in dem Remote-Computersystem (3);
Erzeugen des Aktualisierungsdatenpakets (7), das in einem Firmware-Aktualisierungspaketteil (75) der mehreren Aktualisierungspaketteile (71, 72, 73, 74, 75) eine aktuelle Firmware (751, 132) gemäß dem aktuellen Firmware-Indikator (3312) sowie Metadaten (750) für den Firmware-Aktualisierungspaketteil (75) enthält; und
Empfangen des Firmware-Aktualisierungspaketteils (75), der die aktuelle Firmware (751, 132) enthält, in der Internet-der-Dinge-Vorrichtung (1) von dem mobilen Kommunikationsgerät (2) über die Nahbereichskommunikation.

6. Verfahren nach einem der Ansprüche 1 bis 5, das ferner umfasst:
Senden (S41) einer Upload-Statusnachricht für das Remote-Computersystem (3) von der Internet-der-Dinge-Vorrichtung (1) an ein mobiles Kommunikationsgerät (2) über eine Nahbereichskommunikation innerhalb des Nahbereichs der Internet-der-Dinge-Vorrichtung (1), zur Weiterleitung an das Remote-Computersystem (3) über ein mobiles Funkkommunikationsnetzwerk, wobei die Upload-Statusnachricht eine eindeutige Kennung (34) der Internet-der-Dinge-Vorrichtung (1) enthält;
Empfangen (S44) der Upload-Statusnachricht von der Internet-der-Dinge-Vorrichtung (1) im Remote-Computersystem (3), wie sie vom mobilen Kommunikationsgerät (2) über das mobile Funkkommunikationsnetzwerk weitergeleitet wurde; und
Speichern (S47) der eindeutigen Kennung (34), die mit dem Digitalen Zwilling (33) der Internet-der-Dinge-Vorrichtung (1) verknüpft ist, im Remote-Computersystem (3).

7. Verfahren nach Anspruch 6, das ferner umfasst:
Speichern (S47) der Konfigurationsdaten des Digitalen Zwillings (33), einschließlich der Adresse des mobilen Kommunikationsgeräts (2) als Kommunikationsrelaisadresse (3310), im Remote-Computersystem (3).

8. Verfahren gemäß einem der Ansprüche 1 bis 7, wobei das Verfahren ferner umfasst:
Senden (S51) einer Uhraktualisierungsanfrage für das Remote-Computersystem (3) von der Internet-der-Dinge-Vorrichtung (1) an das mobile Kommunikationsgerät (2) über Nahbereichskommunikation;
Empfangen (S54) der Uhraktualisierungsnachricht von der Internet-der-Dinge-Vorrichtung (1) im Remote-Computersystem (3), wie sie vom mobilen Kommunikationsgerät (2) über das mobile Funkkommunikationsnetzwerk weitergeleitet wurde;
Senden (S56) einer Uhraktualisierungsanweisung, die einen aktuellen Zeitstempel für die Internet-der-Dinge-Vorrichtung (1) enthält, vom Remote-Computersystem (3) an das mobile Kommunikationsgerät (2) über das mobile Funkkommunikationsnetzwerk unter Verwendung der Kommunikationsrelaisadresse (3310), die mit der eindeutigen Kennung (34) der Internet-der-Dinge-Vorrichtung (1) verknüpft ist;
Empfangen (S59) der Uhraktualisierungsanweisung in der Internet-der-Dinge-Vorrichtung (1) vom mobilen Kommunikationsgerät (2) über Nahbereichskommunikation; und
Neukonfigurieren (S510) einer Uhr der Internet-der-Dinge-Vorrichtung (1) gemäß dem aktuellen Zeitstempel, vorausgesetzt, dass eine Zeitdifferenz zwischen dem Senden der Uhraktualisierungsanfrage und dem Empfang der Uhraktualisierungsanweisung ein vordefiniertes Zeitlimit nicht überschreitet.

9. Ein Remote-Computersystem (3) zur Kommunikation mit einer Internet-der-Dinge-Vorrichtung (1), wobei das Computersystem ein Kommunikationsmodul (32) umfasst, das so konfiguriert ist, dass es Daten mit einem mobilen Kommunikationsgerät (2) über ein mobiles Funkkommunikationsnetzwerk austauscht; wobei das Remote-Computersystem (3) ferner umfasst:
einen Speicher (31), der so konfiguriert ist, dass er einen Digitalen Zwilling (33) der Internet-der-Dinge-Vorrichtung (1) speichert, der mit einer eindeutigen Kennung (34) der Internet-der-Dinge-Vorrichtung (1) verknüpft ist, der Digitale Zwilling (33) umfasst einen aktuellen Satz von Zugriffsrechten (13) für die Internet-der-Dinge-Vorrichtung (1) und Konfigurationsdaten (331), die eine Adresse eines mobilen Kommunikationsgeräts (2) als Kommunikationsrelaisadresse (3310) enthalten;
einen Prozessor (30), der so konfiguriert ist, dass er für die Internet-der-Dinge-Vorrichtung (1) ein Aktualisierungsdatenpaket (7) erzeugt (S13), das in mehrere Aktualisierungspaketteile (71, 72, 73) unterteilt ist, wobei jeder Aktualisierungspaketteil (71, 72, 73) eine Teilmenge des aktuellen Satzes von Zugriffsrechten (13) und Aktualisierungsmetadaten (710, 720, 730) für den Aktualisierungspaketteil (71, 72, 73) enthält;
der Prozessor (30), der so konfiguriert ist, dass er über das mobile Funkkommunikationsnetzwerk das Aktualisierungsdatenpaket (7) für die Internet-der-Dinge-Vorrichtung (1) an die Kommunikationsrelaisadresse (3310) überträgt (S14), die mit der eindeutigen Kennung (34) der Internet-der-Dinge-Vorrichtung (1) verknüpft ist, damit das mobile Kommunikationsgerät (2) einen oder mehrere erforderliche Aktualisierungspaketteile (71, 72, 73) über Nahbereichskommunikation weiterleitet (S16), wie durch eine von dem mobilen Kommunikationsgerät (2) von der Internet-der-Dinge-Vorrichtung (1) empfangene Anforderungsnachricht angegeben.

10. Das Remote-Computersystem (3) nach Anspruch 9, wobei der Prozessor (30) ferner so konfiguriert ist, dass er aus einer Upload-Statusnachricht der Internet-der-Dinge-Vorrichtung (1) wie sie vom mobilen Kommunikationsgerät (2) von der Internet-der-Dinge-Vorrichtung (1) über eine Nahbereichskommunikation empfangen und vom mobilen Kommunikationsgerät (2) über das mobile Funkkommunikationsnetzwerk an das Computersystem (3) weitergeleitet wurde, die eindeutige Kennung (34) der Internet-der-Dinge-Vorrichtung (1) extrahiert (S45), die mit dem Digitalen Zwilling (33) verknüpft ist, und eine Adresse des mobilen Kommunikationsgeräts (2) als Kommunikationsrelaisadresse (3310) im Speicher des Remote-Computersystems (3) als Teil der Konfigurationsdaten (331) des Digitalen Zwillings (33) der Internet-der-Dinge-Vorrichtung (1) speichert (S47).

11. Das Remote-Computersystem (3) nach einem der Ansprüche 9 oder 10, wobei der Prozessor (30) ferner so konfiguriert ist zum:
Empfangen (S54) einer Uhraktualisierungsnachricht von der Internet-der-Dinge-Vorrichtung (1), wie sie von dem mobilen Kommunikationsgerät (2) von der Internet-der-Dinge-Vorrichtung (1) über eine Nahbereichskommunikation empfangen und von dem mobilen Kommunikationsgerät (2) über das mobile Funkkommunikationsnetzwerk an das Computersystem (3) weitergeleitet (S53) wurde,
Erzeugen (S55) einer Uhraktualisierungsanweisung, die einen aktuellen Zeitstempel für die Internet-der-Dinge-Vorrichtung (1) enthält, und
Übertragen (S56) der Uhraktualisierungsanweisung für die Internet-der-Dinge-Vorrichtung (1) über das mobile Funkkommunikationsnetzwerk an die Kommunikationsrelaisadresse (3310), die mit der eindeutigen Kennung (34) der Internet-der-Dinge-Vorrichtung (1) verknüpft ist, zur Weiterleitung durch das mobile Kommunikationsgerät (2) über die Nahbereichskommunikation an die Internet-der-Dinge-Vorrichtung (1).

12. Das Remote-Computersystem (3) nach einem der Ansprüche 9 bis 11, wobei der aktuelle Satz von Zugriffsrechten (13) der Internet-der-Dinge-Vorrichtung (1) Zugriff auf ein oder mehrere Zugriffskontrollterminals (6) autorisiert, wobei ein bestimmtes Zugriffsrecht (1300, 1301, 1302, 1303) des aktuellen Satzes von Zugriffsrechten (13), das sich auf ein bestimmtes Zugriffskontrollterminal (6) bezieht und eines oder mehrere der folgenden Elemente umfasst: einen Zugriffskontrollterminalidentifikator, einen kryptografischen Schlüssel des Zugriffskontrollterminals oder ein Zugriffszeitschema.

13. Das Remote-Computersystem (3) nach einem der Ansprüche 9 bis 12, wobei der aktuelle Satz von Zugriffsrechten (13) der Internet-der-Dinge-Vorrichtung (1) Zugriff auf ein oder mehrere Zugriffskontrollterminals (6) autorisiert, wobei ein bestimmtes Zugriffsrecht (1300, 1301, 1302, 1303) des aktuellen Satzes von Zugriffsrechten (13), das sich auf ein bestimmtes Zugriffskontrollterminal (6) bezieht und eine verschlüsselte Zugangsnutzlast umfasst.

14. Eine Internet-der-Dinge-Vorrichtung (1), die eine elektronische Kommunikationsschaltung (11) für die Nahbereichskommunikation, einen mit der elektronischen Kommunikationsschaltung (11) verbundenen Prozessor (10) und einen Speicher (12) umfasst, wobei der Prozessor (10) so konfiguriert ist zum:
Empfangen (S17) von Aktualisierungsmetadaten (710, 720, 730) von einem Remote-Computersystem (3), die von einem mobilen Kommunikationsgerät (2) weitergeleitet wurden, wobei sich die Aktualisierungsmetadaten (710, 720, 730) auf jeden einer Vielzahl von Aktualisierungspaketteilen (71, 72, 73) eines vom mobilen Kommunikationsgerät (2) empfangenen Aktualisierungsdatenpakets (7) beziehen;
Identifizieren (S18) eines oder mehrerer erforderlicher Aktualisierungspaketteile (71, 72, 73) unter Verwendung der von dem mobilen Kommunikationsgerät (2) empfangenen Aktualisierungsmetadaten (710, 720, 730) und gespeicherter Metadaten, die sich auf einen oder mehrere Sätze von Zugriffsrechten (13) beziehen, die im Speicher (12) der Internet-der-Dinge-Vorrichtung (1) gespeichert sind;
Senden (S19) einer Anforderungsnachricht, die den einen oder die mehreren erforderlichen Aktualisierungspaketteile (71, 72, 73) angibt, von der Internet-der-Dinge-Vorrichtung (1) an das mobile Kommunikationsgerät (2) über die Nahbereichskommunikation; und
Empfangen (S112) der einen oder mehreren erforderlichen Aktualisierungspaketteile (71, 72, 73) des Aktualisierungsdatenpakets (7), wie in der Anforderungsnachricht angegeben, in der Internet-der-Dinge-Vorrichtung (1) vom mobilen Kommunikationsgerät (2) über die Nahbereichskommunikation.

15. Die Internet-der-Dinge-Vorrichtung (1) nach Anspruch 14, wobei die Internet-der-Dinge-Vorrichtung (1) so konfiguriert ist, dass sie den aktuellen Satz von Zugriffsrechten (13) unter Verwendung der empfangenen erforderlichen Paketbestandteile (71, 72, 73) des Aktualisierungsdatenpakets (7) erfasst, wobei der aktuelle Satz von Zugriffsrechten (13) der Internet-der-Dinge-Vorrichtung (1) Zugriff auf ein oder mehrere Zugriffskontrollterminals (6) autorisiert, wobei ein bestimmtes Zugriffsrecht (1300, 1301, 1302, 1303) des aktuellen Satzes von Zugriffsrechten (13) sich auf ein bestimmtes Zugriffskontrollterminal (6) bezieht und eines oder mehrere der Folgenden umfasst: einen Zugriffskontrollterminalidentifikator, einen kryptografischen Schlüssel des Zugriffskontrollterminals oder ein Zugriffszeitschema, und wobei der Prozessor (10) ferner konfiguriert ist zum:
Empfangen (S21) des Zugriffskontrollterminalidentifikators unter Verwendung der elektronischen Kommunikationsschaltung (11) von dem bestimmten Zugriffskontrollterminal (6) über Kurzstreckenkommunikation;
Überprüfen (S23) einer Zugriffsberechtigung unter Verwendung des bestimmten Zugriffsrechts (1300, 1301, 1302, 1303) und des empfangenen Zugriffskontrollterminalidentifikators;
Erzeugen (S24) unter Verwendung des bestimmten Zugriffsrechts (1300, 1301, 1302, 1303) eine Zugangsberechtigungsnachricht; und
Senden (S25) der Zugangsberechtigungsnachricht unter Verwendung der elektronischen Kommunikationsschaltung (11) an das Zugriffskontrollterminal (6) über Kurzstreckenkommunikation.

16. Die Internet-der-Dinge-Vorrichtung (1) gemäß einem der Ansprüche 14 oder 15, wobei die Internet-der-Dinge-Vorrichtung (1) so konfiguriert ist, dass sie den aktuellen Satz von Zugriffsrechten (13) unter Verwendung der empfangenen erforderlichen Paketbestandteile (71, 72, 73) des Aktualisierungsdatenpakets (7) erfasst, wobei der aktuelle Satz von Zugriffsrechten (13) der Internet-der-Dinge-Vorrichtung (1) Zugriff auf ein oder mehrere Zugriffskontrollterminals (6) ermöglicht, wobei ein bestimmtes Zugriffsrecht (1300, 1301, 1302, 1303) des aktuellen Satzes von Zugriffsrechten (13) sich auf ein bestimmtes Zugriffskontrollterminal (6) bezieht und eine verschlüsselte Zugangsnutzlast umfasst, und wobei der Prozessor (10) ferner so konfiguriert ist, dass er die verschlüsselte Zugangsnutzlast unter Verwendung der elektronischen Kommunikationsschaltung (11) an das Zugriffskontrollterminal (6) überträgt (S33).

## Revendications

1. Procédé de communication entre un dispositif de l'Internet des objets (1) et un système informatique distant (3), le procédé comprenant :
stocker (S12), dans le système informatique distant (3), associé à un identifiant unique (34) d'un dispositif de l'Internet des objets (1), d'un jumeau numérique (33) dudit dispositif de l'Internet des objets (1), le jumeau numérique (33) comprenant un ensemble actuel de droits d'accès (13) pour le dispositif de l'Internet des objets (1) et des données de configuration (331) incluant une adresse d'un dispositif de communication mobile (2), en tant qu'adresse de relais de communication (3310);
générer (S13) dans le système informatique distant (3), pour le dispositif de l'Internet des objets (1), un paquet de données de mise à jour (7), divisé en une pluralité de parties de paquet de mise à jour (71, 72, 73), chaque partie de paquet de mise à jour (71, 72, 73) comprenant un sous-ensemble de l'ensemble actuel de droits d'accès (13) et des métadonnées de mise à jour (710, 720, 730) pour ladite partie de paquet de mise à jour ;
transmettre (S14), via un réseau de communication radio mobile, le paquet de données de mise à jour (7) destiné au dispositif de l'Internet des objets (1), depuis le système informatique distant (3) vers le dispositif de communication mobile (2), en utilisant l'adresse de relais de communication (3310) associée à l'identifiant unique (34) du dispositif de l'Internet des objets (1) ;
recevoir (S17), dans le dispositif de l'Internet des objets (1), des métadonnées de mise à jour (710, 720, 730) pour chacune des parties du paquet de mise à jour (71, 72, 73), depuis le dispositif de communication mobile (2) via une communication de proximité ;
identifier (S18), dans le dispositif de l'Internet des objets (1), une ou plusieurs parties du paquet de mise à jour requises (71, 72, 73), à l'aide des métadonnées de mise à jour (710, 720, 730) reçues du dispositif de communication mobile (2) et des métadonnées stockées relatives à un ou plusieurs ensembles de droits d'accès (13) stockés dans une mémoire du dispositif de l'Internet des objets (1) ;
transmettre (S19), depuis le dispositif de l'Internet des objets (1) vers le dispositif de communication mobile (2), via la communication de proximité, un message de requête indiquant la ou les parties de paquet de mise à jour requises (71, 72, 73) ; et
recevoir (S110), dans le dispositif de l'Internet des objets (1), en provenance du dispositif de communication mobile (2), via la communication de proximité, de la ou des parties de paquet requises (71, 72, 73) du paquet de données de mise à jour (7) telles qu'indiquées dans le message de requête.

2. Procédé selon la revendication 1, dans lequel l'ensemble actuel de droits d'accès (13) autorise l'accès, pour le dispositif de l'Internet des objets (1), à un ou plusieurs terminaux de contrôle d'accès (6), un droit d'accès particulier (1300, 1301, 1302, 1303) de l'ensemble actuel de droits d'accès (13) se rapportant à un terminal de contrôle d'accès particulier (6) et comprenant un ou plusieurs des éléments suivants : un identifiant de terminal de contrôle d'accès, une clé cryptographique de terminal de contrôle d'accès ou un schéma de temps d'accès, et dans lequel l'accès est autorisé selon les étapes suivantes :
recevoir (S21), dans le dispositif de l'Internet des objets (1), à partir du terminal de contrôle d'accès particulier (6) via une communication à courte portée, de l'identifiant du terminal de contrôle d'accès ;
vérifier (S23), dans le dispositif de l'Internet des objets (1), l'autorisation d'accès à l'aide du droit d'accès particulier (1300, 1301, 1302, 1303) et de l'identifiant du terminal de contrôle d'accès reçu ;
générer (S24), dans le dispositif de l'Internet des objets (1), à l'aide du droit d'accès particulier (1300, 1301, 1302, 1303), un message d'autorisation d'accès ; et
transmettre (S25), depuis le dispositif de l'Internet des objets (1) vers le terminal de contrôle d'accès (6) via une communication à courte portée, le message d'autorisation d'accès.

3. Procédé selon l'une des revendications 1 ou 2, dans lequel l'ensemble actuel de droits d'accès (13) autorise l'accès, pour le dispositif de l'Internet des objets (1), à un ou plusieurs terminaux de contrôle d'accès (6), un droit d'accès particulier (1300, 1301, 1302, 1303) de l'ensemble actuel de droits d'accès (13) se rapportant à un terminal de contrôle d'accès particulier (6) et comprenant une charge utile d'accès chiffrée, et dans lequel l'accès est autorisé selon les étapes suivantes :
transmettre (S30), depuis le dispositif de l'Internet des objets (1) vers le terminal de contrôle d'accès (6) via une communication à courte portée, la charge utile d'accès chiffrée ;
vérifier (S34), dans le terminal de contrôle d'accès (6), de la charge utile d'accès chiffrée ; et
autoriser (S35), dans le terminal de contrôle d'accès (6), l'accès pour le dispositif de l'Internet des objets (1).

4. Procédé selon l'une des revendications 1 à 3, le procédé comprenant :
stocker, dans le système informatique distant (3), des données de configuration du jumeau numérique (33) comprenant en outre une caractéristique de configuration de mémoire (3311, 741, 131) comprenant une allocation de mémoire d'une pluralité de partitions de mémoire (120, 121, 122) ;
générer le paquet de données de mise à jour (7) de manière à inclure, dans une partie de paquet de mise à jour de mémoire (74) parmi la pluralité de parties de paquet de mise à jour (71, 72, 73, 74, 75), la caractéristique de configuration de mémoire (3311, 741, 131) et des métadonnées (740) relatives à la partie de paquet de mise à jour de mémoire (74) ; et
recevoir, dans le dispositif de l'Internet des objets (1), en provenance du dispositif de communication mobile (2), via la communication de proximité, de la partie de paquet de mise à jour spécifique (74) comprenant la caractéristique de configuration de mémoire (3311, 741, 131).

5. Procédé selon l'une des revendications 1 à 4, le procédé comprenant :
stocker, dans le système informatique distant (3), des données de configuration du jumeau numérique (33) comprenant un indicateur de micrologiciel actuel (3312);
générer le paquet de données de mise à jour (7) de manière à inclure, dans une partie de paquet de mise à jour du micrologiciel (75) parmi la pluralité de parties de paquet de mise à jour (71, 72, 73, 74, 75), un micrologiciel actuel (751, 132) correspondant à l'indicateur de micrologiciel actuel (3312) et des métadonnées (750) pour la partie de paquet de mise à jour du micrologiciel (75) ; et
recevoir, dans le dispositif de l'Internet des objets (1), en provenance du dispositif de communication mobile (2), via la communication de proximité, de la partie de paquet de mise à jour du micrologiciel (75) comprenant le micrologiciel actuel (751, 132).

6. Procédé selon l'une des revendications 1 à 5, comprenant en outre :
transmettre (S41), via une communication de proximité, d'un message d'état de téléchargement destiné au système informatique distant (3), depuis le dispositif de l'Internet des objets (1) vers un dispositif de communication mobile (2), situé à proximité immédiate du dispositif de l'Internet des objets (1), afin de transférer vers le système informatique distant (3), via un réseau de communication radio mobile, le message d'état de téléchargement comprenant un identifiant unique (34) du dispositif de l'Internet des objets (1) ;
recevoir (S44), dans le système informatique distant (3), du message d'état de téléchargement provenant du dispositif de l'Internet des objets (1), tel que transféré par le dispositif de communication mobile (2) via le réseau de communication radio mobile ; et
stocker (S47) dans le système informatique distant (3) l'identifiant unique (34) associé au jumeau numérique (33) du dispositif de l'Internet des objets (1).

7. Procédé selon la revendication 6, comprenant en outre :
stocker (S47) dans le système informatique distant (3) des données de configuration du jumeau numérique (33) comprenant l'adresse du dispositif de communication mobile (2) en tant qu'adresse de relais de communication (3310).

8. Procédé selon l'une des revendications 1 à 7, le procédé comprenant en outre :
transmettre (S51), depuis le dispositif de l'Internet des objets (1), d'une demande de mise à jour de l'horloge destinée au système informatique distant (3), vers le dispositif de communication mobile (2) via une communication de proximité ;
recevoir (S54), dans le système informatique distant (3), du message de mise à jour de l'horloge provenant du dispositif de l'Internet des objets (1), tel qu'il a été transféré par le dispositif de communication mobile (2) via le réseau de communication radio mobile ;
transmettre (S56), via le réseau de communication radio mobile, d'une instruction de mise à jour de l'horloge comprenant un horodatage actuel pour le dispositif de l'Internet des objets (1), depuis le système informatique distant (3) vers le dispositif de communication mobile (2), en utilisant l'adresse de relais de communication (3310) liée à l'identifiant unique (34) du dispositif de l'Internet des objets (1) ;
recevoir (S59), dans le dispositif de l'Internet des objets (1), l'instruction de mise à jour de l'horloge, provenant du dispositif de communication mobile (2) via une communication de proximité ; et
reconfigurer (S510) l'horloge du dispositif de l'Internet des objets (1) en fonction de l'horodatage actuel, à condition que le décalage temporel entre l'émission de la requête de mise à jour de l'horloge et la réception de l'instruction de mise à jour de l'horloge ne dépasse pas un délai d'expiration prédéfini.

9. Système informatique distant (3) destiné à communiquer avec un dispositif de l'Internet des objets (1), le système informatique comprenant un module de communication (32) configuré pour échanger des données avec un dispositif de communication mobile (2) via un réseau de communication radio mobile ; dans lequel le système informatique distant (3) comprend en outre :
une mémoire (31) configurée pour stocker un jumeau numérique (33) du dispositif de l'Internet des objets (1) associé à un identifiant unique (34) dudit dispositif de l'Internet des objets (1), le jumeau numérique (33) comprenant un ensemble actuel de droits d'accès (13) pour le dispositif de l'Internet des objets (1) et des données de configuration (331) incluant une adresse d'un dispositif de communication mobile (2), en tant qu'adresse de relais de communication (3310) ;
un processeur (30) configuré pour générer (S13), pour le dispositif de l'Internet des objets (1), un paquet de données de mise à jour (7) divisé en une pluralité de parties de paquet de mise à jour (71, 72, 73), chaque partie de paquet de mise à jour (71, 72, 73) comprenant un sous-ensemble de l'ensemble actuel de droits d'accès (13) et des métadonnées de mise à jour (710, 720, 730) pour la partie de paquet de mise à jour (71, 72, 73) ;
le processeur (30) configuré pour transmettre (S14), via le réseau de communication radio mobile, le paquet de données de mise à jour (7) destiné au dispositif de l'Internet des objets (1) vers l'adresse de relais de communication (3310) associée à l'identifiant unique (34) du dispositif de l'Internet des objets (1), afin que le dispositif de communication mobile (2) transfère (S16), via une communication de proximité, une ou plusieurs parties du paquet de mise à jour requises (71, 72, 73), comme indiqué par un message de demande reçu par le dispositif de communication mobile (2) en provenance du dispositif de l'Internet des objets (1).

10. Le système informatique distant (3) selon la revendication 9, dans lequel le processeur (30) est en outre configuré pour extraire (S45), à partir d'un message d'état de téléchargement provenant du dispositif de l'Internet des objets (1), tel que reçu par le dispositif de communication mobile (2) en provenance du dispositif de l'Internet des objets (1) via un circuit de communication de proximité et transmis par le dispositif de communication mobile (2) via le réseau de radiocommunication mobile vers le système informatique (3), l'identifiant unique (34) du dispositif de l'Internet des objets (1) associé au jumeau numérique (33), et à stocker (S47) dans la mémoire du système informatique distant (3) une adresse du dispositif de communication mobile (2), en tant qu'adresse de relais de communication (3310), dans le cadre des données de configuration (331) du jumeau numérique (33) du dispositif de l'Internet des objets (1).

11. Le système informatique distant (3) selon l'une des revendications 9 ou 10, dans lequel le processeur (30) est en outre configuré :
pour recevoir (S54) un message de mise à jour d'horloge provenant du dispositif de l'Internet des objets (1), tel qu'il a été reçu par le dispositif de communication mobile (2) depuis le dispositif de l'Internet des objets (1) via un circuit de communication de proximité et transmis (S53) par le dispositif de communication mobile (2) via le réseau de communication radio mobile vers le système informatique (3),
pour générer (S55) une instruction de mise à jour d'horloge comprenant un horodatage actuel pour le dispositif de l'Internet des objets (1), et
de transmettre (S56), via le réseau de radiocommunication mobile, l'instruction de mise à jour de l'horloge destinée au dispositif de l'Internet des objets (1) à l'adresse de relais de communication (3310) associée à l'identifiant unique (34) du dispositif de l'Internet des objets (1), en vue de son transfert par le dispositif de communication mobile (2), via le circuit de communication de proximité, vers le dispositif de l'Internet des objets (1).

12. Le système informatique distant (3) selon l'une des revendications 9 à 11, dans lequel l'ensemble actuel de droits d'accès (13) autorise l'accès, pour le dispositif de l'Internet des objets (1), à un ou plusieurs terminaux de contrôle d'accès (6), un droit d'accès particulier (1300, 1301, 1302, 1303) de l'ensemble actuel de droits d'accès (13) se rapportant à un terminal de contrôle d'accès particulier (6) et comprenant un ou plusieurs des éléments suivants : un identifiant de terminal de contrôle d'accès, une clé cryptographique de terminal de contrôle d'accès ou un schéma de temps d'accès.

13. Le système informatique distant (3) selon l'une des revendications 9 à 12, dans lequel l'ensemble actuel de droits d'accès (13) autorise l'accès, pour le dispositif de l'Internet des objets (1), à un ou plusieurs terminaux de contrôle d'accès (6), un droit d'accès particulier (1300, 1301, 1302, 1303) de l'ensemble actuel de droits d'accès (13) se rapportant à un terminal de contrôle d'accès particulier (6) et comprenant une charge utile d'accès chiffrée.

14. Dispositif de l'Internet des objets (1), comprenant un circuit de communication électronique (11) pour une communication de proximité, un processeur (10) connecté au circuit de communication électronique (11), et une mémoire (12), dans lequel le processeur (10) est configuré pour :
recevoir (S17), depuis un système informatique distant (3), des métadonnées de mise à jour (710, 720, 730) transmises par un dispositif de communication mobile (2), lesdites métadonnées de mise à jour (710, 720, 730) se rapportant à chacune d'une pluralité de parties de paquet de mise à jour (71, 72, 73) d'un paquet de données de mise à jour (7) reçu par le dispositif de communication mobile (2) ;
identifier (S18) une ou plusieurs parties de paquet de mise à jour requises (71, 72, 73), à l'aide des métadonnées de mise à jour (710, 720, 730) reçues du dispositif de communication mobile (2) et des métadonnées stockées se rapportant à un ou plusieurs ensembles de droits d'accès (13) stockés dans la mémoire (12) du dispositif de l'Internet des objets (1) ;
transmettre (S19), depuis le dispositif de l'Internet des objets (1) vers le dispositif de communication mobile (2), via la communication de proximité, un message de requête indiquant la ou les parties du paquet de mise à jour requises (71, 72, 73) ; et
recevoir (S112), dans le dispositif de l'Internet des objets (1), en provenance du dispositif de communication mobile (2), via la communication de proximité, la ou les parties de paquet de mise à jour requises (71, 72, 73) du paquet de données de mise à jour (7) telles qu'indiquées dans le message de requête.

15. Dispositif de l'Internet des objets (1) selon la revendication 14, dans lequel le dispositif de l'Internet des objets (1) est configuré pour acquérir l'ensemble actuel de droits d'accès (13) à l'aide des parties de paquet requises reçues (71, 72, 73) du paquet de données de mise à jour (7), l'ensemble actuel de droits d'accès (13) autorisant l'accès, pour le dispositif de l'Internet des objets (1), à un ou plusieurs terminaux de contrôle d'accès (6), un droit d'accès particulier (1300, 1301, 1302, 1303) de l'ensemble actuel de droits d'accès (13) se rapportant à un terminal de contrôle d'accès particulier (6) et comprenant un ou plusieurs des éléments suivants : un identifiant de terminal de contrôle d'accès, une clé cryptographique de terminal de contrôle d'accès ou un schéma de temps d'accès, et dans lequel le processeur (10) est en outre configuré pour :
recevoir (S21), à l'aide du circuit de communication électronique (11), depuis le terminal de contrôle d'accès particulier (6) via une communication à courte portée, l'identifiant du terminal de contrôle d'accès ;
vérifier (S23) l'autorisation d'accès à l'aide du droit d'accès particulier (1300, 1301, 1302, 1303) et de l'identifiant du terminal de contrôle d'accès reçu ;
générer (S24), à l'aide du droit d'accès particulier (1300, 1301, 1302, 1303), un message d'autorisation d'accès ; et
transmettre (S25), à l'aide du circuit de communication électronique (11), au terminal de contrôle d'accès (6) via une communication à courte portée, le message d'autorisation d'accès.

16. Dispositif de l'Internet des objets (1) selon l'une des revendications 14 ou 15, dans lequel le dispositif de l'Internet des objets (1) est configuré pour acquérir l'ensemble actuel de droits d'accès (13) à l'aide des parties requises reçues du paquet (71, 72, 73) du paquet de données de mise à jour (7), l'ensemble actuel de droits d'accès (13) autorisant l'accès, pour le dispositif de l'Internet des objets (1), à un ou plusieurs terminaux de contrôle d'accès (6), un droit d'accès particulier (1300, 1301, 1302, 1303) de l'ensemble actuel de droits d'accès (13) se rapportant à un terminal de contrôle d'accès particulier (6) et comprenant une charge utile d'accès chiffrée, et dans lequel le processeur (10) est en outre configuré pour transmettre (S33) au terminal de contrôle d'accès (6), à l'aide du circuit de communication électronique (11), la charge utile d'accès chiffrée.
